# FASCICULE DE BREVET EUROPEEN

(11) **EP 3 244 300 B1**
(45) Date de publication et mention de la délivrance du brevet: **09.02.2022**
(21) Numéro de dépôt: 16183497.3
(22) Date de dépôt: 10.08.2016
(51) Int. Cl.: G06F 11/28

(54) **PROCÉDÉ ET OUTIL DE GÉNÉRATION D'UN CODE PROGRAMME CONFIGURÉ POUR EFFECTUER UNE VÉRIFICATION DU FLOT DE CONTRÔLE D'UN AUTRE CODE PROGRAMME CONTENANT DES INSTRUCTIONS DE BRANCHEMENTS INDIRECTS**
VERFAHREN UND INSTRUMENT ZUR ERZEUGUNG EINES KONFIGURIERTEN PROGRAMMCODES FÜR DIE DURCHFÜHRUNG EINER ÜBERPRÜFUNG DES KONTROLLFLUSSES EINES ANDEREN PROGRAMMCODES, DER INDIREKTE VERZWEIGUNGSBEFEHLE ENTHÄLT
METHOD AND TOOL FOR GENERATING A PROGRAM CODE CONFIGURED FOR PERFORMING A CONTROL FLOW CHECK OF ANOTHER PROGRAM CODE INCLUDING INDIRECT BRANCHING INSTRUCTIONS

(30) Priorité: 24.02.2016 FR 1651507
(43) Date de publication de la demande: 15.11.2017
(73) Titulaire: STMicroelectronics (Rousset) SAS, 13790 Rousset (FR)
(72) Inventeur: TERRAS, Lydie, 13710 FUVEAU (FR); ORLANDO, William, 13790 PEYNIER (FR)
(74) Mandataire: Casalonga

(56) Documents cités:
- US-A1- 2014 281 424
- Thierry Michel: "Test en ligne des systemes a base de microprocesseur", , 5 mars 1993 (1993-03-05), pages 1-283, XP55427067, Extrait de l'Internet: URL:https://tel.archives-ouvertes.fr/docs/ 00/34/34/88/PDF/Michel.Thierry_1993_these. pdf [extrait le 2017-11-21]
- MICHEL T ET AL: "A new approach to control flow checking without program modification", PROCEEDINGS OF THE INTERNATIONAL SYMPOSIUM ON FAULT TOLERANT COMPUTING MONTREAL, JUNE 25 - 27, 1991; [INTERNATIONAL SYMPOSIUM ON FAULT TOLERANT COMPUTING SYSTEMS. (FTCS)], LOS ALAMITOS, IEEE COMP. SOC. PRESS, US, 25 juin 1991 (1991-06-25), pages 334-341, XP032360621, DOI: 10.1109/FTCS.1991.146682 ISBN: 978-0-8186-2150-5
- BERGAOUI S ET AL: "IDSM: An improved disjoint signature monitoring scheme for processor behavioral checking", 2014 15TH LATIN AMERICAN TEST WORKSHOP - LATW, IEEE, 12 mars 2014 (2014-03-12), pages 1-6, XP032611953, DOI: 10.1109/LATW.2014.6841915 [extrait le 2014-06-23]
- MAHMOOD A ET AL: "Concurrent error detection using watchdog processors-a survey", IEEE TRANSACTIONS ON COMPUTERS, IEEE, US, vol. 37, no. 2, 1 février 1988 (1988-02-01), pages 160-174, XP011148724, ISSN: 0016-9340, DOI: 10.1109/12.2145

## Description

Des modes de mise en œuvre et de réalisation de l'invention concernent la génération de codes programmes destinés à la vérification de flots de contrôle de programmes à surveiller, en particulier pour la vérification de flots de contrôle avec signatures disjointes (DSM: Disjoint Signature Monitoring), et tout particulièrement la gestion des instructions de branchements indirects présentes dans le code programme à surveiller.

La vérification de flot de contrôle (CFC : Control Flow Checking) permet de vérifier que les instructions d'un programme sont lues sans erreur et dans le bon ordre.

Ces méthodes de vérification du type CFC peuvent être divisées en deux groupes à savoir les méthodes utilisant des signatures enfouies (ESM : Embedded Signature Monitoring) et celles utilisant des signatures disjointes (DSM).

Dans le premier cas, les signatures de référence et les directives pour la vérification sont enfouies dans le code à surveiller sous la forme d'instructions spéciales.

Dans le cas des signatures disjointes, les signatures de référence et les directives pour la vérification sont stockées dans une autre partie de la mémoire système ou dans une mémoire disjointe ce qui présente l'inconvénient d'augmenter le coût mémoire.

Par ailleurs, le programme de surveillance est généralement implémenté dans un coprocesseur couramment dénommé en anglais « Watchdog » et ce coprocesseur outre le fait qu'il doit accéder à la mémoire d'une manière autonome pour ne pas dégrader les performances du système, doit aussi maintenir une synchronisation étroite avec le processeur exécutant le code programme à surveiller.

Afin d'effectuer la vérification du flot de contrôle, le programme de surveillance requiert d'être parfaitement synchronisé avec le programme à surveiller de façon à pouvoir être capable de suivre son exécution pour notamment vérifier les signatures des blocs de base composant le programme, et des transferts de flots de contrôle d'un bloc de base à un autre par le biais généralement d'instructions de saut ou branchement (Jump Instructions).

Généralement, on associe une instruction « Watchdog » à la première et à la dernière instruction de chaque bloc de base du programme à surveiller. A la fin d'un bloc de base se terminant sur une instruction de branchement, le coprocesseur est capable de suivre le processeur en effectuant lui-même un branchement vers sa propre instruction de destination correspondant à l'instruction cible sur laquelle le processeur a sauté.

Ensuite, le coprocesseur peut vérifier que le processeur a bien sauté vers la bonne instruction parce que l'instruction de destination du coprocesseur contient l'adresse de l'instruction cible correspondante dans le programme du processeur.

On voit donc que la synchronisation entre le processeur et le coprocesseur est basée sur le lien entre les instructions processeur et les instructions coprocesseur. Ceci est possible seulement si l'on connaît la cible de chaque branchement du code à surveiller avant son exécution de façon à être capable de créer l'instruction correspondante de branchement du coprocesseur.

Or, des branchements indirects peuvent être présents dans le code programme à surveiller.

Comme il est bien connu par l'homme du métier, un branchement direct est un branchement dont l'adresse cible de l'instruction de branchement peut être calculée à partir de l'instruction seulement (le code et l'adresse).

Les branchements indirects sont tous les branchements qui ne sont pas directs, par exemple ceux pour lesquels le calcul de l'adresse cible utilise les valeurs d'un ou de plusieurs registres.

Ainsi, pour un branchement indirect, l'adresse cible ne peut pas être connue uniquement à partir des instructions du code programme puisque par définition cette adresse dépend de l'exécution du code programme.

Par ailleurs, un branchement indirect peut avoir de multiples adresses cibles. Et, un coprocesseur du type « Watchdog » est actuellement capable de ne gérer qu'une seule adresse cible encodée dans l'instruction de branchement de son code programme.

Ce problème est particulièrement sensible dans le cadre des méthodes DSM et de ce fait, la plupart des méthodes DSM ne traitent pas la question des branchements indirects ce qui signifie que le code à surveiller ne doit pas contenir de tels branchements indirects.

Or, les branchements indirects sont couramment utilisés dans des programmes embarqués car ils permettent une réduction de la taille du code et des pénalités de cycles.

Il est possible dans certains cas de branchements indirects, de déterminer un jeu de cibles légitimes avant exécution du programme. Dans ce cas, le programme du coprocesseur peut être entièrement construit. Cependant, le problème de la gestion des cibles multiples demeure.

En effet, actuellement, les adresses vers lesquelles le coprocesseur doit se brancher sont encodées dans des instructions de branchement qui n'offrent pas assez de bits pour encoder plusieurs adresses.

En outre, même si plusieurs adresses pouvaient être stockées, en utilisant par exemple une table, il est nécessaire de relier chacune d'elles avec l'adresse correspondante du processeur faute de quoi le coprocesseur ne peut pas savoir vers quelle adresse se brancher.

Par ailleurs outre les branchements indirects dont les cibles multiples sont prédictibles, il peut exister des branchements indirects dont les cibles ne sont pas prédictibles, car par exemple les adresses de ces cibles peuvent dépendre d'un ou de plusieurs paramètres dont les valeurs peuvent dépendre elles-mêmes de l'exécution du programme.

En fait en théorie l'adresse de toute cible est prédictible. Mais en pratique dans certains cas, comme notamment celui mentionné ci-avant, les possibilités peuvent devenir tellement nombreuses qu'il devient quasiment impossible de prévoir tous les branchements possibles. C'est la raison pour laquelle on qualifie alors ces branchements indirects de « non prédictibles ».

Parmi ces branchements indirects « non prédictibles », on peut citer les instructions de sauts indirects (« indirect jump »).

Parmi les autres branchements indirects possibles on peut également citer les instructions d'appels de fonctions (« call ») dont les branchements peuvent dépendre également dans certains cas de paramètres ayant des valeurs non prédictibles.

Il existe donc un besoin de générer un code programme de surveillance d'un code programme à surveiller qui puisse gérer de façon simple et efficace les branchements indirects présents dans le code programme à surveiller, et en particulier ceux conduisant à des cibles multiples, que ces branchements indirects soient prédictibles ou non.

Le document "Test en ligne des systèmes a base de microprocesseur", 5 mars 1993 (1993-03-05), présente une méthode de contrôle de flot basé sur l'exécution en parallèle d'un programme principal et d'un programme auxiliaire. Quant au document US 2014/281424 A1 (BOBBA JAYARAM [US] ET AL) 18 septembre 2014, il présente une méthode de suivi de l'exécution d'un programme visant à améliorer les performances de l'exécution d'un programme grâce à des annotations du programme.

Selon un aspect, il est proposé un procédé de génération d'un code programme principal destiné à être exécuté par une unité de traitement principale, par exemple un cœur de processeur, et d'un code programme auxiliaire destiné à être exécuté par une unité de traitement auxiliaire, par exemple un coprocesseur du type « Watchdog », pour une vérification du flot de contrôle du programme principal.

Selon une caractéristique générale de cet aspect, la génération du code programme principal comporte la génération d'au moins une instruction principale de branchement indirect tandis que la génération du code programme auxiliaire comprend une génération d'au moins une instruction auxiliaire de branchement indirect associée à ladite au moins une instruction principale de branchement indirect.

Par ailleurs, la génération du code programme principal comprend en outre au moins une insertion d'au moins une information de synchronisation destinée à être traitée par l'unité de traitement auxiliaire et configurée pour permettre au moins une synchronisation entre une partie du code programme auxiliaire résultant de l'exécution de ladite au moins une instruction auxiliaire de branchement indirect et une partie du code programme principal résultant de l'exécution de ladite au moins une instruction principale de branchement indirect.

Ainsi, selon cet aspect on place avantageusement au moins un point de synchronisation, généralement plusieurs points de synchronisation dans le code programme principal, c'est-à-dire le code programme à surveiller, qui est (sont) associé(s) à une partie du code programme principal résultant de l'exécution d'une instruction de branchement indirect. Et, ce(s) point(s) de synchronisation va (vont) pouvoir être accessible(s) à l'unité de traitement auxiliaire de façon à ce que l'unité de traitement auxiliaire puisse se synchroniser lors de l'exécution de sa propre instruction de branchement indirect.

Et le nombre de points de synchronisation dans le code programme principal peut être aussi grand que le nombre de branchements possibles (résultant des instructions de branchements indirects) pour lesquels on souhaite effectuer une synchronisation ce qui n'est pas le cas lors de l'utilisation d'une mémoire dont la taille limite le nombre de branchements à synchroniser.

Selon un mode de mise en œuvre dans lequel les branchements auxiliaires potentiels résultant de l'exécution de ladite au moins une instruction auxiliaire de branchement indirect et les branchements principaux potentiels résultant de l'exécution de ladite au moins une instruction principale de branchement indirect, sont prédictibles, la génération du code programme principal comprend des insertions d'informations de synchronisation destinées à être traitées par l'unité de traitement auxiliaire et configurées pour permettre des synchronisations entre lesdits branchements auxiliaires potentiels résultant de l'exécution de ladite au moins une instruction auxiliaire de branchement indirect et lesdits branchements principaux potentiels résultant de l'exécution de ladite au moins une instruction principale de branchement indirect.

Ces branchements potentiels sont prédictibles et déterminables grâce à l'analyse du code programme principal. Ainsi s'ils sont par exemple reliés à la valeur d'un registre capable de prendre un jeu prédéterminé de valeurs, on peut définir lors de l'analyse du code un branchement potentiel et son adresse cible associée, pour chaque valeur du registre parmi le jeu prédéterminé de valeurs.

Ainsi, selon ce mode de mise en œuvre, la partie du code programme principal et la partie du code programme auxiliaire qui vont être synchronisées sont les différents branchements résultant de l'exécution d'une instruction de branchement indirect, et on place avantageusement des points de synchronisation dans le code programme principal, c'est-à-dire le code programme à surveiller, qui sont associés aux différents branchements résultant de l'exécution d'une instruction de branchement indirect. Et, ces points de synchronisation vont pouvoir être accessibles à l'unité de traitement auxiliaire de façon à ce que l'unité de traitement auxiliaire, sache quel branchement utiliser lors de l'exécution de sa propre instruction de branchement indirect.

Et, le fait de placer ces points de synchronisation dans le code programme permet de gérer efficacement des adresses cibles multiples prédictibles lors de tels branchements indirects en s'affranchissant par exemple de l'utilisation de mémoires spécifiques, telles que des mémoires CAM (Content-Adressable-Memories) pour stocker les différentes adresses cibles de ces instructions de branchement.

En effet, ce type de mémoire est coûteux en termes d'accès en raison du nombre de comparaisons à effectuer. Par ailleurs, le nombre de cibles est limité par la longueur de la mémoire, ce qui n'est pas le cas avec des points de synchronisation insérés dans le code programme principal.

Le code programme auxiliaire est généralement destiné à être stocké dans une mémoire auxiliaire tandis que le code programme principal est généralement destiné à être stocké dans une mémoire principale.

Selon un mode de mise en œuvre, les branchements principaux potentiels pointent vers plusieurs adresses principales cibles de la mémoire principale et les informations de synchronisation sont respectivement associées à ces adresses principales cibles et désignent respectivement des adresses auxiliaires cibles dans la mémoire programme auxiliaire.

Les branchements auxiliaires potentiels pointent alors respectivement vers lesdites adresses auxiliaires cibles.

Et, ladite au moins une instruction auxiliaire de branchement indirect est configurée pour, lors de son exécution, sélectionner le branchement auxiliaire potentiel associé à l'adresse auxiliaire cible désignée par l'information de synchronisation délivrée par la mémoire principale postérieurement à la délivrance de l'instruction principale de branchement indirect.

Selon un mode de mise en œuvre dans lequel un programme peut être représenté par un graphe de flot de contrôle (CFG : « Control Flow Graph »), la génération du code programme principal comprend une génération de blocs basiques principaux d'instructions principales comportant au moins un premier bloc basique principal se terminant par ladite instruction principale de branchement indirect et plusieurs blocs basiques principaux cibles débutant respectivement auxdites adresses principales cibles.

Bien entendu, le terme « premier » associé au bloc basique principal se terminant par l'instruction principale de branchement indirect, est simplement utilisé ici pour distinguer ce bloc basique principal des autres blocs basiques principaux ne se terminant pas par une instruction de branchement indirect, sans que bien entendu, ce « premier » bloc basique principal soit nécessairement le « premier » des blocs dans le graphe. Il peut bien entendu être situé à n'importe quelle position dans le graphe.

De même, selon ce mode de mise en œuvre, la génération du code programme auxiliaire comprend une génération de blocs basiques auxiliaires d'instructions auxiliaires associés auxdits blocs basiques principaux et comportant au moins un premier bloc basique auxiliaire associé au premier bloc basique principal et se terminant par ladite instruction auxiliaire de branchement indirect, et plusieurs blocs basiques auxiliaires cibles débutant respectivement auxdites adresses auxiliaires cibles.

La génération du code programme principal comporte alors en outre, pour chaque bloc basique principal cible, une insertion dans le code programme principal d'au moins une instruction principale complémentaire contenant ladite instruction de synchronisation désignant ladite adresse auxiliaire cible correspondante, et ladite instruction auxiliaire de branchement indirect est une instruction configurée pour, lors de son exécution par l'unité de traitement auxiliaire, forcer cette unité de traitement auxiliaire à attendre la délivrance de l'une desdites adresses auxiliaires cibles.

En d'autres termes, on insère dans le code programme principal au moins une instruction principale complémentaire qui va contenir l'adresse auxiliaire cible correspondante pour l'unité de traitement auxiliaire et on configure l'instruction auxiliaire de branchement indirect, par exemple en lui affectant un code opération (connu par l'homme du métier sous la dénomination anglo-saxonne «opcode») spécial, de sorte que son exécution par le coprocesseur le conduise à attendre la délivrance de l'une desdites adresses auxiliaires cibles par le code programme principal, avant d'effectuer son propre branchement.

Plusieurs possibilités existent pour implémenter la délivrance de l'information de synchronisation désignant l'adresse auxiliaire cible correspondante.

Une première possibilité est particulièrement bien adaptée à une architecture de processeur dite « dual issue », c'est-à-dire dont le code programme est organisé en paquets (« bundles ») qui peuvent contenir une ou deux instructions (à chaque cycle le processeur peut exécuter une voire deux instructions).

Selon cette première possibilité, chaque emplacement mémoire de la mémoire principale a une capacité de stockage de deux mots d'instructions de façon à pouvoir stocker un paquet (« bundle ») de deux instructions. Et, dans ce cas, la paire d'instructions située au début de chaque bloc basique principal cible comporte éventuellement une instruction principale cible du code programme principal destiné à l'unité de traitement principale, et ladite instruction principale complémentaire destinée à l'unité de traitement auxiliaire et contenant l'adresse auxiliaire cible correspondante.

Dans le cas où l'unité de traitement principale n'est pas un processeur du type « dual issue », c'est-à-dire que l'emplacement mémoire de la mémoire principale a une capacité de stockage d'un mot d'instruction, on peut prévoir que chaque bloc principal cible débute par un jeu d'instructions, contenant ladite au moins une instruction principale complémentaire, configurées pour fournir l'adresse auxiliaire cible correspondante à ladite unité de traitement auxiliaire et ayant ensemble une sémantique nulle vis-à-vis de l'unité de traitement principale.

Une sémantique nulle vis-à-vis de l'unité de traitement principale s'entend comme un jeu d'instructions ne produisant aucun effet lors de son exécution, sur le déroulement du programme de l'unité de traitement principale.

Ainsi, par exemple, ce jeu d'instructions peut comporter une première instruction du type « empiler une valeur immédiate sur une pile (mémoire) », cette valeur immédiate étant l'adresse auxiliaire cible à transmettre à l'unité de traitement auxiliaire, suivie d'une instruction de « décrémentation du pointeur de pile » pour effacer cette valeur de la pile.

On voit donc que ces deux instructions successives ont au final aucune incidence sur le code programme exécuté par le processeur.

Selon encore une autre possibilité compatible également avec un emplacement mémoire de la mémoire principale ayant une capacité de stockage d'un mot d'instruction, on peut utiliser le code opération (« Opcode ») d'une instruction qui est généralement incorporé dans l'instruction.

Ainsi, dans le cas où il existe au moins un « opcode » non utilisé par l'unité de traitement principale, il peut être avantageux de prévoir que chaque bloc principal cible débute par une instruction additionnelle, formant ladite au moins une instruction principale complémentaire, contenant un code opération (opcode) correspondant à une opération non utilisée par l'unité de traitement principale. En d'autres termes cet « opcode » est libre. Et dans ce cas, cette instruction additionnelle est destinée à l'unité de traitement auxiliaire et contient l'adresse auxiliaire cible à fournir à ladite unité de traitement auxiliaire.

Par ailleurs, puisque cette instruction additionnelle est destinée également à être délivrée à l'unité de traitement principale, il est nécessaire que le code opération (opcode) de l'instruction additionnelle soit destinée à être remplacé par code opération (opcode) correspondant à une non opération (NOP : « No OPeration ») avant délivrance à l'unité de traitement principale de cette instruction additionnelle.

Ainsi, cette instruction additionnelle dont l' « opcode » a été modifié n'aura aucun effet sur le processeur.

En variante, ladite au moins une instruction principale de branchement indirect peut être une instruction principale de saut indirect incorporée dans une fonction du code programme principal, ladite au moins une instruction auxiliaire de branchement indirect peut être une instruction auxiliaire de saut indirect incorporée dans une fonction du code programme auxiliaire, et les branchements auxiliaires potentiels résultant de l'exécution de ladite au moins une instruction auxiliaire de saut indirect et les branchements principaux potentiels résultant de l'exécution de ladite au moins une instruction principale de saut indirect sont non prédictibles.

La fonction du code programme principal comporte au minimum une instruction principale de retour, et la fonction du code programme auxiliaire comporte également au minimum une instruction auxiliaire de retour.

Ladite au moins une information de synchronisation destinée à être traitée par l'unité de traitement auxiliaire est alors avantageusement configurée pour permettre au moins une synchronisation entre ladite instruction principale de retour et ladite instruction auxiliaire de retour.

Ainsi quelle que soit la cible du saut indirect non prédictible, on assure au moins une synchronisation entre l'unité de traitement principale et l'unité de traitement auxiliaire au moins lors de l'exécution des instructions de retour respectives.

Cela étant en pratique une fonction peut comporter outre ladite instruction de saut indirect non prédictible, d'autres instructions de branchements, directs ou indirects, par exemple des sauts, en particulier mais non nécessairement indirects, prédictibles ou non ou encore des instructions d'appels prédictibles ou non.

Et dans ce cas on place avantageusement des points de synchronisation au niveau de ces autres instructions de branchements mais également au niveau de ladite instruction de saut indirect non prédictible.

Ainsi selon ce mode de mise en œuvre, la partie du code programme principal et la partie du code programme auxiliaire qui vont être synchronisées, sont ladite instruction de saut indirect non prédictible et ces autres instructions de branchement qui peuvent ne pas découler directement de l'instruction de saut indirect non prédictible. Et de ce fait la synchronisation peut intervenir, certes au sein de ladite fonction, mais plusieurs cycles après l'exécution de l'instruction de saut indirect non prédictible.

En d'autres termes, selon un mode de mise en œuvre dans lequel ladite fonction du code programme principal comporte en outre au moins une instruction principale supplémentaire de branchement tandis que ladite fonction du code programme auxiliaire comporte en outre au moins une instruction auxiliaire supplémentaire de branchement, la génération du code programme principal comprend des insertions d'informations de synchronisation destinées à être traitées par l'unité de traitement auxiliaire et configurées pour permettre des synchronisations entre ladite instruction principale de retour et ladite instruction auxiliaire de retour, entre ladite au moins une instruction principale de saut indirect et ladite au moins une instruction auxiliaire de saut indirect, et entre chaque instruction principale supplémentaire de branchement et chaque instruction auxiliaire supplémentaire de branchement.

Plus précisément, selon un mode de mise en œuvre, le code programme auxiliaire étant destiné à être stocké dans une mémoire auxiliaire et le code programme principal étant destiné à être stocké dans une mémoire principale, les informations de synchronisation sont respectivement associées à l'instruction principale de retour, à ladite au moins une instruction principale de saut indirect et à chaque instruction principale supplémentaire de branchement et désignent respectivement des adresses auxiliaires de destination dans la mémoire programme auxiliaire auxquelles sont respectivement stockées l'instruction auxiliaire de retour, ladite au moins une instruction auxiliaire de saut indirect et chaque instruction auxiliaire supplémentaire de branchement.

Par ailleurs ladite au moins une instruction auxiliaire de saut indirect est configurée pour, lors de son exécution, sélectionner le branchement auxiliaire associé à l'adresse auxiliaire de destination désignée par l'information de synchronisation délivrée par la mémoire principale postérieurement à la délivrance de l'instruction principale de saut indirect.

A cet égard, selon un mode de mise en œuvre, la génération du code programme principal comprend pour ladite instruction principale de retour, ladite au moins une instruction principale de saut indirect et chaque instruction principale supplémentaire de branchement, une insertion dans le code programme principal d'au moins une instruction principale supplétive contenant l'information de synchronisation correspondante désignant l'adresse auxiliaire de destination correspondante, et ladite au moins une instruction auxiliaire de saut indirect est configurée pour, lors de son exécution par l'unité de traitement auxiliaire, forcer cette unité de traitement auxiliaire à attendre la délivrance de l'une desdites adresses auxiliaires de destination.

Dans le cas d'une architecture du type « dual issue », c'est-à-dire dans le cas où chaque emplacement mémoire de la mémoire principale a une capacité de stockage de deux mots d'instructions, toute paire d'instructions comportant soit ladite au moins une instruction principale de saut indirect soit une instruction principale supplémentaire de branchement soit une instruction principale de retour contient également ladite instruction principale supplétive correspondante destinée à l'unité de traitement auxiliaire et contenant l'adresse auxiliaire de destination correspondante.

En variante ladite au moins une instruction principale de branchement indirect peut être une instruction principale d'appel indirect incorporée dans une fonction du code programme principal tandis que ladite au moins une instruction auxiliaire de branchement indirect est une instruction auxiliaire d'appel indirect incorporée dans une fonction du code programme auxiliaire.

Dans ce cas le code programme principal peut comporter plusieurs autres fonctions et le code programme auxiliaire peut comporter plusieurs autres fonctions.

La génération du code programme principal comprend alors avantageusement des insertions d'informations de synchronisation destinées à être traitées par l'unité de traitement auxiliaire et configurées pour permettre des synchronisations respectives entre les entrées de toutes les fonctions du code programme principal et les entrées de toutes les fonctions du code programme auxiliaire.

Plus précisément, le code programme auxiliaire étant destiné à être stocké dans une mémoire auxiliaire et le code programme principal étant destiné à être stocké dans une mémoire principale, les informations de synchronisation sont respectivement associées aux instructions initiales de toutes les fonctions du code programme principal et désignent respectivement des adresses auxiliaires de destination dans la mémoire programme auxiliaire auxquelles sont respectivement stockées les instructions initiales de toutes les fonctions du code programme auxiliaire, et ladite au moins une instruction auxiliaire d'appel indirect est avantageusement configurée pour, lors de son exécution, sélectionner le branchement auxiliaire associé à l'adresse auxiliaire de destination désignée par l'information de synchronisation délivrée par la mémoire principale postérieurement à la délivrance de l'instruction principale d'appel indirect.

Plus précisément, selon un mode de mise en œuvre, la génération du code programme principal comprend pour chaque fonction du code programme principal, une insertion dans le code programme principal d'au moins une instruction principale supplétive associée à l'instruction initiale de cette fonction et contenant l'information de synchronisation correspondante désignant l'adresse auxiliaire de destination correspondante, et ladite au moins une instruction auxiliaire d'appel indirect est configurée pour, lors de son exécution par l'unité de traitement auxiliaire, forcer cette unité de traitement auxiliaire à attendre la délivrance de l'une desdites adresses auxiliaires de destination.

Dans le cadre d'une architecture du type « dual issue », chaque emplacement mémoire de la mémoire principale a une capacité de stockage de deux mots d'instructions, et la paire d'instructions située au début de chaque fonction du code programme principal comporte une instruction principale du code programme principal destinée à l'unité de traitement principale et ladite instruction principale supplétive destinée à l'unité de traitement auxiliaire et contenant l'adresse auxiliaire de destination correspondante.

Dans le cas où l'unité de traitement principale n'est pas un processeur du type « dual issue », c'est-à-dire que chaque emplacement mémoire de la mémoire principale a une capacité de stockage d'un mot d'instruction, chaque fonction du code programme principal peut débuter avantageusement par un jeu d'instructions contenant ladite au moins une instruction principale supplétive et configurées pour fournir l'adresse auxiliaire de destination correspondante à ladite unité de traitement auxiliaire et ayant ensemble une sémantique nulle vis-à-vis de l'unité de traitement principale.

En variante, toujours dans le cas où chaque emplacement mémoire de la mémoire principale a une capacité de stockage d'un mot d'instruction, chaque instruction principale comporte un code opération, et chaque fonction du code programme principal peut débuter par une instruction additionnelle, formant ladite instruction principale supplétive, contenant un code opération correspondant à une opération non utilisée par l'unité de traitement principale, destinée à l'unité de traitement auxiliaire et contenant l'adresse auxiliaire de destination à fournir à ladite unité de traitement auxiliaire ; le code opération de l'instruction additionnelle est destinée à être remplacé par un code opération correspondant à une non opération (NOP) avant délivrance à l'unité de traitement principale de ladite instruction additionnelle.

Bien entendu il est possible de combiner les mises en œuvre relatives au traitement des instructions de branchements indirects prédictibles avec celles relatives aux instructions de branchements indirects non prédictibles, comme par exemple les instructions de sauts indirects non prédictibles et les instructions d'appels indirects.

Selon un autre aspect, il est proposé un outil informatique, par exemple un compilateur, comprenant des moyens de génération configurés pour générer un code programme principal destiné à être exécuté par une unité de traitement principale et un code programme auxiliaire destiné à être exécuté par une unité de traitement auxiliaire pour une vérification du flot de contrôle du code programme principal.

Selon une caractéristique générale de cet autre aspect, les moyens de génération sont configurés pour générer au moins une instruction principale de branchement indirect, au moins une instruction auxiliaire de branchement indirect associée à ladite au moins une instruction principale de branchement indirect et pour insérer au moins une information de synchronisation destinée à être traitées par l'unité de traitement auxiliaire et configurée pour permettre au moins une synchronisation entre une partie du code programme auxiliaire résultant de l'exécution de ladite au moins une instruction auxiliaire de branchement indirect et une partie du code programme principal résultant de l'exécution ladite au moins une instruction principale de branchement indirect.

Selon un mode de réalisation dans lequel les branchements auxiliaires potentiels résultant de l'exécution de ladite au moins une instruction auxiliaire de branchement indirect et les branchements principaux potentiels résultant de l'exécution de ladite au moins une instruction principale de branchement indirect, sont prédictibles, les moyens de génération sont configurés pour insérer des informations de synchronisation destinées à être traitées par l'unité de traitement auxiliaire et configurées pour permettre des synchronisations entre les branchements auxiliaires potentiels destinés à être issus de l'exécution ladite au moins une instruction auxiliaire de branchement indirect et les branchements principaux potentiels destinés à être issus de l'exécution de ladite au moins une instruction principale de branchement indirect.

Selon un mode de réalisation, le code programme auxiliaire est destiné à être stocké dans une mémoire auxiliaire, le code programme principal est destiné à être stocké dans une mémoire principale, et les moyens de génération sont configurés pour
- faire pointer lesdits branchements principaux potentiels vers plusieurs adresses principales cibles de la mémoire principale,
- associer les informations de synchronisation respectivement à ces adresses principales cibles et les faire désigner respectivement des adresses auxiliaires cibles dans la mémoire programme auxiliaire,
- faire pointer lesdits branchements auxiliaires potentiels respectivement vers lesdites adresses auxiliaires cibles, et
- configurer ladite au moins une instruction auxiliaire de branchement indirect pour, lors de son exécution, sélectionner le branchement auxiliaire potentiel associé à l'adresse auxiliaire cible désignée par l'information de synchronisation délivrée par la mémoire principale postérieurement à la délivrance de l'instruction principale de branchement indirect.

Selon un mode de réalisation, les moyens de génération sont configurés pour générer
- des blocs basiques principaux d'instructions principales comportant au moins un premier bloc basique principal se terminant par ladite instruction principale de branchement indirect, et plusieurs blocs basiques principaux cibles débutant respectivement auxdites adresses principales cibles,
- des blocs basiques auxiliaires d'instructions auxiliaires associés auxdits blocs basiques principaux et comportant au moins un premier bloc basique auxiliaire associé au premier bloc basique principal et se terminant par ladite instruction auxiliaire de branchement indirect, et plusieurs blocs basiques auxiliaires cibles débutant respectivement auxdites adresses auxiliaires cibles,
et les moyens de génération sont en outre aptes à insérer dans le code programme principal pour chaque bloc basique principal cible, au moins une instruction principale complémentaire contenant ladite information de synchronisation désignant ladite adresse auxiliaire cible correspondante, et à configurer ladite instruction auxiliaire de branchement indirect pour, lors de son exécution par l'unité de traitement auxiliaire, forcer cette unité de traitement auxiliaire à attendre la délivrance de l'une desdites adresses auxiliaires cibles.

Selon un mode de réalisation possible, chaque emplacement mémoire de la mémoire principale a une capacité de stockage de deux mots d'instructions, et les moyens de génération sont configurés pour générer une paire d'instructions situées au début de chaque bloc basique principal cible de sorte qu'elle comporte éventuellement une instruction principale cible du code programme principal destinée à l'unité de traitement principale, et ladite instruction principale complémentaire destinée à l'unité de traitement auxiliaire et contenant l'adresse auxiliaire cible correspondante.

Selon un autre mode de réalisation possible, chaque emplacement mémoire de la mémoire principale a une capacité de stockage d'un mot d'instruction, et les moyens de génération sont configurés pour faire débuter chaque bloc principal cible par un jeu d'instructions, contenant ladite instruction principale complémentaire, configurées pour fournir l'adresse auxiliaire cible correspondante à ladite unité de traitement auxiliaire et ayant ensemble une sémantique nulle vis-à-vis de l'unité de traitement principale.

Selon encore un autre mode de réalisation possible, chaque emplacement mémoire de la mémoire principale a une capacité de stockage d'un mot d'instruction, chaque instruction principale comporte un code opération (opcode) contenu dans cette instruction principale, et les moyens de génération sont configurés pour faire débuter chaque bloc principal cible par une instruction additionnelle contenant un code opération correspondant à une opération non utilisée par l'unité de traitement principale, destinée à l'unité de traitement auxiliaire et contenant l'adresse auxiliaire cible à fournir à ladite unité de traitement auxiliaire.

Selon une variante ladite au moins une instruction principale de branchement indirect est une instruction principale de saut indirect incorporée dans une fonction du code programme principal comportant une instruction principale de retour et ladite au moins une instruction auxiliaire de branchement indirect est une instruction auxiliaire de saut indirect incorporée dans une fonction du code programme auxiliaire comportant une instruction auxiliaire de retour, les branchements auxiliaires potentiels résultant de l'exécution de ladite au moins une instruction auxiliaire de saut indirect et les branchements principaux potentiels résultant de l'exécution de ladite au moins une instruction principale de saut indirect étant non prédictibles.

Les moyens de génération sont alors avantageusement configurés pour insérer ladite au moins une information de synchronisation destinée à être traitée par l'unité de traitement auxiliaire pour permettre au moins une synchronisation entre ladite instruction principale de retour et ladite instruction auxiliaire de retour.

Selon un mode de réalisation dans lequel ladite fonction du code programme principal comporte en outre au moins une instruction principale supplémentaire de branchement et ladite fonction du code programme auxiliaire comporte en outre au moins une instruction auxiliaire supplémentaire de branchement, les moyens de génération sont configurés pour insérer des informations de synchronisation destinées à être traitées par l'unité de traitement auxiliaire pour permettre des synchronisations entre ladite instruction principale de retour et ladite instruction auxiliaire de retour, entre ladite au moins une instruction principale de saut indirect et ladite au moins une instruction auxiliaire de saut indirect, et entre chaque instruction principale supplémentaire de branchement et chaque instruction auxiliaire supplémentaire de branchement.

Selon un mode de réalisation, le code programme auxiliaire est destiné à être stocké dans une mémoire auxiliaire, le code programme principal est destiné à être stocké dans une mémoire principale, et les moyens de génération sont configurés pour
associer les informations de synchronisation respectivement à l'instruction principale de retour, à ladite au moins une instruction principale de saut indirect et à chaque instruction principale supplémentaire de branchement et les faire désigner respectivement des adresses auxiliaires de destination dans la mémoire programme auxiliaire auxquelles sont respectivement stockées l'instruction auxiliaire de retour, ladite au moins une instruction auxiliaire de saut indirect et chaque instruction auxiliaire supplémentaire de branchement, et
configurer ladite au moins une instruction auxiliaire de saut indirect pour, lors de son exécution, sélectionner le branchement auxiliaire associé à l'adresse auxiliaire de destination désignée par l'information de synchronisation délivrée par la mémoire principale postérieurement à la délivrance de l'instruction principale de saut indirect.

Plus précisément, Selon un mode de réalisation, les moyens de génération sont configurés pour
insérer dans le code programme principal, pour ladite instruction principale de retour, ladite au moins une instruction principale de saut indirect et chaque instruction principale supplémentaire de branchement, au moins une instruction principale supplétive contenant l'information de synchronisation correspondante désignant l'adresse auxiliaire de destination correspondante, et
configurer ladite au moins une instruction auxiliaire de saut indirect pour, lors de son exécution par l'unité de traitement auxiliaire, forcer cette unité de traitement auxiliaire à attendre la délivrance de l'une desdites adresses auxiliaires de destination.

Selon un mode de réalisation possible et compatible avec une architecture du type « dual issue », dans lequel chaque emplacement mémoire de la mémoire principale a une capacité de stockage de deux mots d'instructions, les moyens de génération sont configurés pour incorporer dans toute paire d'instructions comportant soit ladite au moins une instruction principale de saut indirect soit une instruction principale supplémentaire de branchement soit une instruction principale de retour, ladite instruction principale supplétive correspondante destinée à l'unité de traitement auxiliaire et contenant l'adresse auxiliaire de destination correspondante.

Selon une autre variante, ladite au moins une instruction principale de branchement indirect peut être une instruction principale d'appel indirect incorporée dans une fonction du code programme principal tandis que ladite au moins une instruction auxiliaire de branchement indirect est une instruction auxiliaire d'appel indirect incorporée dans une fonction du code programme auxiliaire.

Le code programme principal comporte alors par exemple plusieurs autres fonctions et le code programme auxiliaire comporte plusieurs autres fonctions.

Les moyens de génération sont alors avantageusement configurés pour insérer des informations de synchronisation destinées à être traitées par l'unité de traitement auxiliaire et configurées pour permettre des synchronisations respectives entre les entrées de toutes les fonctions du code programme principal et les entrées de toutes les fonctions du code programme auxiliaire.

Selon un mode de réalisation, le code programme auxiliaire est destiné à être stocké dans une mémoire auxiliaire, le code programme principal est destiné à être stocké dans une mémoire principale, et les moyens de génération sont configurés pour
associer les informations de synchronisation respectivement aux instructions initiales de toutes les fonctions du code programme principal et les faire désigner respectivement des adresses auxiliaires de destination dans la mémoire programme auxiliaire auxquelles sont respectivement stockées les instructions initiales de toutes les fonctions du code programme auxiliaire, et
configurer ladite au moins une instruction auxiliaire d'appel indirect pour, lors de son exécution, sélectionner le branchement auxiliaire associé à l'adresse auxiliaire de destination désignée par l'information de synchronisation délivrée par la mémoire principale postérieurement à la délivrance de l'instruction principale d'appel indirect.

Plus précisément, selon un mode de réalisation, les moyens de génération sont configurés pour
insérer dans le code programme principal, pour chaque fonction du code programme principal, au moins une instruction principale supplétive associée à l'instruction initiale de cette fonction et contenant l'information de synchronisation correspondante désignant l'adresse auxiliaire de destination correspondante, et
configurer ladite au moins une instruction auxiliaire d'appel indirect pour, lors de son exécution par l'unité de traitement auxiliaire, forcer cette unité de traitement auxiliaire à attendre la délivrance de l'une desdites adresses auxiliaires de destination.

Selon un mode possible de réalisation compatible avec une architecture du type « dual issue », chaque emplacement mémoire de la mémoire principale a une capacité de stockage de deux mots d'instructions, et les moyens de génération sont configurés pour générer la paire d'instructions située au début de chaque fonction du code programme principal de sorte qu'elle comporte une instruction principale du code programme principal destinée à l'unité de traitement principale et ladite instruction principale supplétive destinée à l'unité de traitement auxiliaire et contenant l'adresse auxiliaire de destination correspondante.

Dans le cas où l'architecture n'est pas du type « dual issue », selon un autre mode de réalisation possible, chaque emplacement mémoire de la mémoire principale a une capacité de stockage d'un mot d'instruction, et les moyens de génération sont configurés pour générer chaque fonction du code programme principal de sorte qu'elle débute par un jeu d'instructions contenant ladite au moins une instruction principale supplétive et configurées pour fournir l'adresse auxiliaire de destination correspondante à ladite unité de traitement auxiliaire et ayant ensemble une sémantique nulle vis-à-vis de l'unité de traitement principale.

Selon encore un autre mode de réalisation possible dans lequel chaque emplacement mémoire de la mémoire principale a une capacité de stockage d'un mot d'instruction, chaque instruction principale comporte un code opération, et les moyens de génération sont configurés pour générer chaque fonction du code programme principal de sorte qu'elle débute par une instruction additionnelle, formant ladite instruction principale supplétive, contenant un code opération correspondant à une opération non utilisée par l'unité de traitement principale, destinée à l'unité de traitement auxiliaire et contenant l'adresse auxiliaire de destination à fournir à ladite unité de traitement auxiliaire.

Les moyens de génération sont par ailleurs avantageusement configurés pour générer un code programme auxiliaire adapté pour effectuer une vérification avec signatures disjointes du flot de contrôle du code programme principal.

Selon un autre aspect, il est proposé un système informatique comprenant une unité de traitement principale, par exemple un processeur, une unité de traitement auxiliaire, par exemple un coprocesseur, une mémoire principale couplée à l'unité de traitement principale et à l'unité de traitement auxiliaire et contenant un code programme principal généré par le procédé tel que défini ci-avant ou par l'outil informatique tel que défini ci-avant, et une mémoire auxiliaire couplée à l'unité de traitement auxiliaire et contenant un code programme auxiliaire généré par le procédé tel que défini ci-avant ou par l'outil informatique tel que défini ci-avant.

D'autres avantages et caractéristiques de l'invention apparaîtront à l'examen de la description détaillée de modes de mise en œuvre et de réalisation, nullement limitatifs, et des dessins annexés sur lesquels :

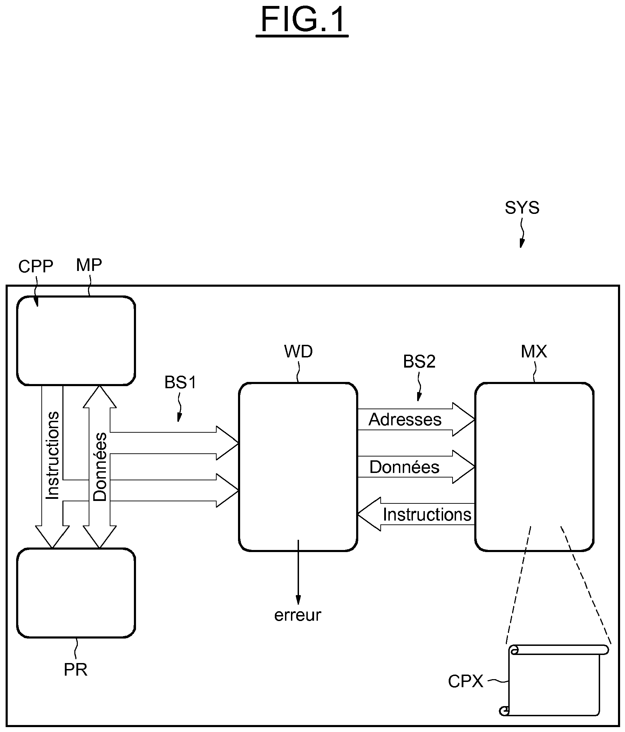

- les figures 1 à 15 illustrent schématiquement différents modes de mise en œuvre et de réalisation de l'invention.

Sur la figure 1, la référence SYS désigne un système informatique comportant une unité de traitement principale PR, par exemple un cœur de processeur, et une unité de traitement auxiliaire WD, par exemple un coprocesseur du type « chien de garde » (« watchdog ») destiné comme on va le voir ci-après à surveiller le flot de contrôle d'un code programme exécuté par l'unité de traitement principale PR.

Le système SYS comporte à cet égard une mémoire principale MP contenant le code programme CPP destiné à être exécuté par l'unité de traitement principale PR et une mémoire auxiliaire MX contenant le code programme auxiliaire CPX destiné à être exécuté par l'unité de traitement auxiliaire WD dans le but de surveiller l'exécution du code programme principal CPP.

A cet égard, les instructions et données extraites de la mémoire principale MP et destinées à l'unité de traitement principale PR sont véhiculées par exemple par un bus BS1 et sont également visibles par l'unité de traitement auxiliaire WD.

Par ailleurs, les adresses, données et instructions nécessaires à l'exécution du code programme auxiliaire CPX par l'unité de traitement auxiliaire WD sont véhiculées par un bus BS2 entre l'unité de traitement auxiliaire WD et la mémoire auxiliaire MX.

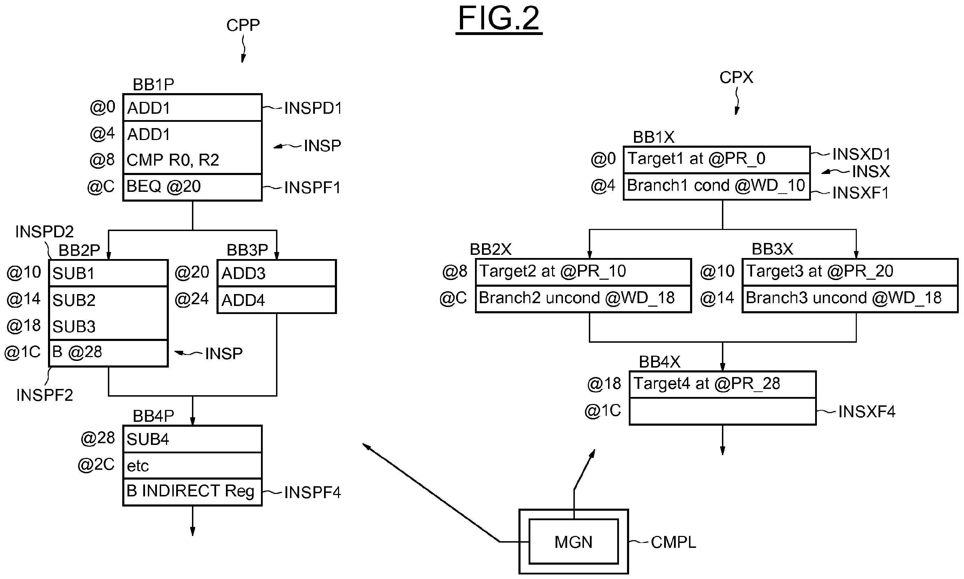

Si l'on se réfère maintenant plus particulièrement à la figure 2, on voit que le code programme principal CPP et le code programme auxiliaire CPX sont générés par des moyens de génération MGN, généralement logiciels, d'un outil de génération informatique, tel qu'un compilateur CMPL.

Classiquement, lors de la compilation d'un code source, le compilateur analyse la syntaxe du code source du programme et définit un code intermédiaire (ou squelette) dans lequel il peut repérer des instructions particulières comme par exemple des instructions de branchement direct ou indirect. Ensuite, le code intermédiaire est converti en code programme exécutable.

Sur la figure 2, on a représenté chaque code programme, par exemple son code intermédiaire, sous forme d'un graphe de flot de contrôle (CFG: Control Flow Graph), dans lequel les blocs représentent des blocs de base du programme et les flèches sont des transferts de flot de contrôle autorisés entre les blocs de base.

Les blocs de base sont définis comme des séquences de code ayant un seul point d'entrée et un seul point de sortie ce qui signifie qu'aucune instruction à l'intérieur d'un bloc de base ne peut forcer l'unité de traitement correspondante à sortir de ce bloc de base. Par ailleurs aucune instruction du bloc de base, sauf la première instruction, ne peut être la cible d'un branchement (ou saut). Seule la dernière instruction peut forcer le programme à commencer l'exécution d'un bloc de base différent.

Plus précisément, dans le cas présent, les moyens de génération MGN du compilateur ont généré pour le code programme principal CPP des blocs basiques principaux BB1P, BB2P, BB3P, BB4P contenant des instructions principales INSP.

De même, les moyens de génération MGN ont généré pour le code programme auxiliaire CPX des blocs basiques auxiliaires BB1X, BB2X, BB3X, BB4X, respectivement associés aux blocs basiques principaux BB1P-BB4P et contenant chacun des instructions auxiliaires INSX.

Chaque bloc basique principal, par exemple le bloc basique principal BB1P comporte une instruction initiale INSPD1 et une instruction finale INSPF1. L'instruction finale peut être une instruction de branchement.

De même, chaque bloc basique auxiliaire BB1X-BB4X comporte une instruction initiale INSXD1 et une instruction finale INSXF1.

Dans l'exemple illustré sur la figure 2, les instructions finales INSXFi des blocs basiques auxiliaires BB1X-BB3X sont des instructions de branchements conditionnels ou inconditionnels.

Généralement, l'instruction initiale INSXDi d'un bloc basique auxiliaire comporte notamment le code opération (opcode) de l'instruction, un champ contenant l'adresse de début de l'instruction correspondante dans le code programme principal, le nombre d'instructions du bloc basique principal correspondant.

Par ailleurs, dans le cas d'une vérification de flots de contrôle avec signatures disjointes, l'instruction finale d'un bloc basique auxiliaire INSXFi contient une signature de référence. En effet, lors de l'exécution de l'instruction initiale du bloc basique auxiliaire, l'unité de traitement auxiliaire calcule, de façon classique et connue en soi, une signature de l'ensemble des instructions principales du bloc basique principal correspondant, délivrées sur le bus BS1 et cette signature calculée est comparée avec la signature de référence aux fins de vérification.

Parmi les blocs basiques principaux et les blocs basiques auxiliaires, le bloc basique principal BB4P, dénommé premier bloc basique principal, et le bloc basique auxiliaire correspondant BB4X, dénommé premier bloc basique auxiliaire, sont des blocs basiques particuliers car leurs instructions finales INSPF4 et INSXF4 comportent des instructions de branchement indirect.

Ces blocs ont été qualifiés de « premier » bloc basique principal et de « premier » bloc basique auxiliaire afin de les différencier des autres blocs basiques ne comportant pas d'instructions de branchement indirect, sans que la notion de « premier » n'ait de rapport quelconque avec le rang du bloc basique dans la séquence des blocs basiques.

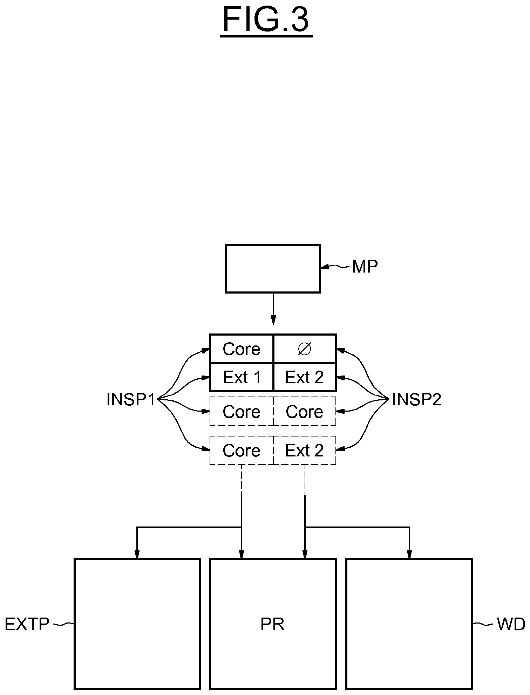

On se réfère plus particulièrement aux figures 3 et suivantes pour illustrer la génération et la gestion de ces instructions de branchement indirect dans le code programme principal et dans le code programme auxiliaire. Et l'on considère ici que ces branchements indirects sont prédictibles c'est-à-dire qu'ils vont induire dans le code programme principal des branchements potentiels vers des adresses cibles principales prédéterminées.

A cet égard, on suppose maintenant à titre d'exemple non limitatif, que, comme illustré sur la figure 3, l'unité de traitement principale PR est une architecture de processeur dite « dual issue » c'est-à-dire qu'elle est capable de traiter dans un même cycle une ou deux instructions.

A cet égard, chaque emplacement mémoire de la mémoire principale MP a une capacité de stockage de deux instructions et la mémoire MP est capable de délivrer lors d'un cycle, sur le bus BS1 un paquet (« bundle ») d'instructions principales, ici une paire d'instructions principales INSP1, INSP2.

Plusieurs cas sont alors possibles.

L'une des instructions INSP1 ou INSP2 peut être une instruction référencée « Core » c'est-à-dire qu'elle est destinée à être exécutée par l'unité de traitement principale PR.

L'une des instructions référencée « EXT1 » peut être destinée à être exécutée par un premier pipeline d'extension EXTP.

L'une des instructions INSP1 ou INSP2 peut être une instruction référencée « EXT2 » c'est-à-dire destinée à être exécutée par un deuxième pipeline d'extension, qui peut être par exemple l'unité de traitement auxiliaire WD.

Enfin l'une des instructions, référencée par le symbole «Ø» peut être une instruction vide.

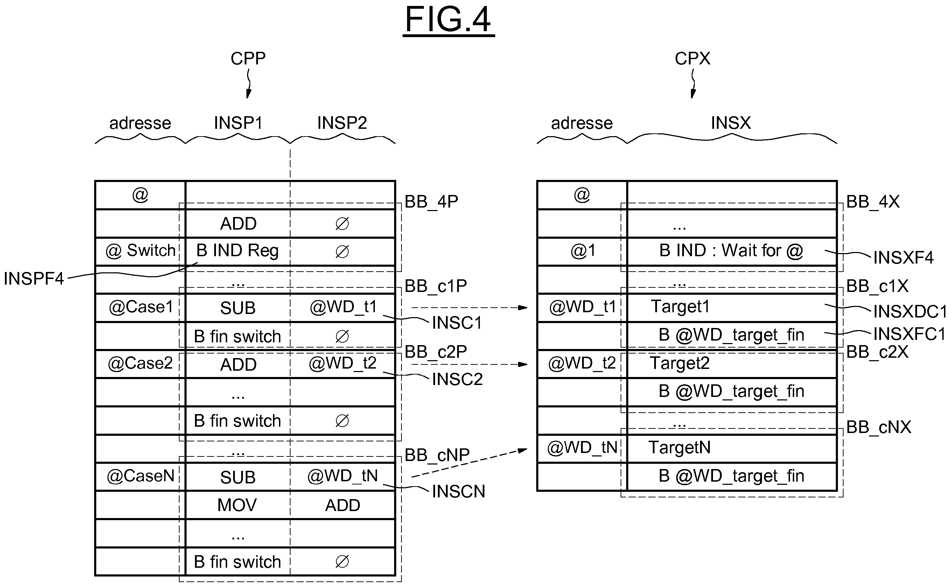

Si l'on se réfère maintenant plus particulièrement à la figure 4, on voit que la partie gauche représente schématiquement les paires d'instructions INSP1, INSP2 délivrées par la mémoire principale MP ainsi que leur adresse @ dans la mémoire principale tandis que la partie droite de la figure 4 représente les instructions auxiliaires INSX avec leur adresse @ dans la mémoire auxiliaire.

On retrouve sur la figure 4 le premier bloc basique principal BB4P et le premier bloc basique auxiliaire BB4X se terminant respectivement par des instructions de branchements indirects.

Plus précisément, on suppose dans cet exemple que la première adresse principale finale du paquet d'instructions situé à l'adresse @switch, est l'instruction de branchement indirect B IND REG. Cette instruction de branchement indirect va induire des branchements potentiels à des adresses principales cibles, ici les adresses principales cibles @Case1-@CaseN en fonction de la valeur par exemple d'un registre.

Les moyens de génération MGN du compilateur génèrent alors plusieurs blocs basiques principaux cibles BB_c1P-BB_cNP débutant respectivement auxdites adresses principales cibles @Casel-@CaseN.

Et, des informations de synchronisation vont être insérées par les moyens de génération MGN du compilateur, ces informations de synchronisation étant destinées à être traitées par l'unité de traitement auxiliaire et configurées pour permettre des synchronisations entre les branchements principaux potentiels issus de l'exécution de l'instruction principale de branchement indirect B IND Reg et les branchements auxiliaires potentiels issus de l'exécution de l'instruction auxiliaire de branchement indirect INSXF4.

Les blocs basiques auxiliaires cibles BB_c1X-BB_cNX, correspondant respectivement aux blocs basiques principaux cibles BB_c1P-BB_cNP, sont générés par les moyens de génération du compilateur CMPL et débutent respectivement aux adresses auxiliaires cibles @WD_t1-@WD_tN désignées par les informations de synchronisation correspondantes.

Dans l'exemple décrit ici, ces informations de synchronisation sont contenues dans des instructions principales complémentaires INSCN. Chaque instruction complémentaire est en fait ici la deuxième instruction INSP2 de la paire d'instructions situées au début du bloc basique principal cible correspondant.

A cet égard, tout comme le compilateur peut repérer les instructions de branchement indirect puisque ces instructions sont labellisées, il peut repérer les instructions cibles, également labellisées, résultant de ces branchements indirects. Et, bien entendu, dans cet exemple, il convient que la deuxième instruction INSP2 d'une paire d'instructions cibles résultant d'un branchement potentiel soit une instruction vide de façon que les moyens de génération du compilateur puissent y insérer l'instruction complémentaire INSCi correspondante. Ceci est un paramètre de contrainte du programme du compilateur.

La première instruction INSP1 de ladite paire peut être une instruction destinée à l'unité de traitement principale PR ou bien éventuellement une instruction vide.

Chaque instruction complémentaire INSCi comporte un code d'opération (opcode) spécifique ainsi que l'adresse auxiliaire cible @WD_ti à laquelle le compilateur va placer le bloc basique auxiliaire cible correspondant BB_ciX.

L'instruction initiale d'un bloc basique auxiliaire cible, par exemple l'instruction initiale INSXDC1 du bloc basique cible BB_c1X comporte notamment un code opération spécifique, l'adresse de début de l'instruction du bloc basique principal cible correspondant, en l'espèce l'adresse @Case1, le nombre d'instructions du bloc principal cible correspondant et optionnellement l'adresse @1 de l'instruction auxiliaire de branchement indirect INSXF4.

Par ailleurs, l'adresse finale d'un bloc basique auxiliaire cible, par exemple l'adresse INSXFC1 contient la signature de référence permettant d'une façon analogue à ce qui a été décrit ci-avant, une vérification de signature.

Quant à l'instruction auxiliaire de branchement indirect INSXF4 générée par les moyens de génération MGN du compilateur, elle est affectée d'un code opération (opcode) spécial correspondant à une opération spéciale que doit faire l'unité de traitement auxiliaire lorsqu'elle traite ce code opération, à savoir une attente de la délivrance de l'information de synchronisation délivrée par la mémoire principale permettant de savoir vers quel bloc basique auxiliaire pointer.

Dans le cas présent, cette opération spéciale, référencée « Wait for @ » est codée en dur dans le coprocesseur WD, et ce dernier, lorsqu'il va exécuter l'instruction auxiliaire de branchement indirect INSXF4 affectée de ce code opération spécial, va attendre l'information de synchronisation, en l'espèce l'adresse auxiliaire cible, encodée dans le prochain jeu d'instructions disponible sur le bus BS1.

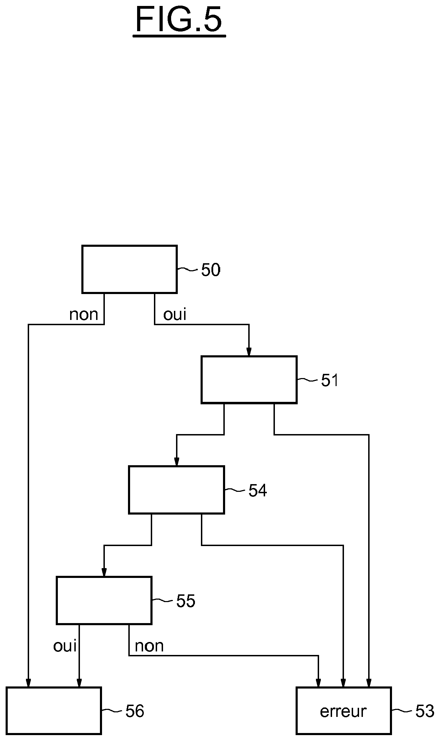

On se réfère maintenant plus particulièrement à la figure 5 pour décrire un exemple de gestion d'une instruction de branchement indirect.

Si dans l'étape 50, l'instruction auxiliaire en cours d'exécution n'est pas une instruction de branchement indirect, alors la gestion classique de surveillance du flot de contrôle du processeur se poursuit de façon normale (étape 56).

Si par contre l'instruction en cours d'exécution est une instruction auxiliaire de branchement indirect, alors conformément à ce qui a été décrit ci-avant, le coprocesseur WD attend l'adresse auxiliaire cible encodée dans l'instruction INSC1 de la paire d'instructions qui va être disponibles sur le bus BS1(étape 51).

Si la prochaine paire d'instructions ne contient pas une instruction complémentaire du type INSCi, ou si le retard de cycles excède un retard prédéterminé, alors le coprocesseur WD émet un signal d'erreur (étape 53).

Si par contre une instruction complémentaire INSCi est présente dans le paquet d'instructions extrait de la mémoire MP, alors le coprocesseur extrait l'adresse auxiliaire cible de l'instruction INSCi et saute alors à l'adresse auxiliaire cible ainsi désignée puis vérifie le code opération (opcode) de l'instruction auxiliaire ainsi atteinte supposée être la première instruction INSXDCi du bloc basique auxiliaire cible correspondant (étape 54).

Si par exemple le code d'opération est erroné alors on repasse à l'étape 53 avec émission d'un message d'erreur.

Si par contre l'instruction atteinte est une instruction du type cible INSXDCi, alors on peut vérifier, bien que ce ne soit pas indispensable, dans l'étape 55, que l'adresse @WD_ti est bien une adresse appartenant aux adresses auxiliaires cibles liées à l'instruction auxiliaire de branchement INSXF4. A cet égard, on compare l'adresse @1 d'instruction de branchement indirect contenue dans l'instruction INSXDCi avec cette adresse @1 qui a été au préalable stockée dans un registre lors de l'exécution de l'instruction de branchement indirect INSXF4, pour vérifier s'il s'agit bien d'une adresse valable.

Si tel n'est pas le cas, il y a encore émission d'un signal d'erreur (étape 53).

Dans le cas contraire, on poursuit le fonctionnement normal de surveillance avec calcul de signature et comparaison avec la signature de référence.

L'invention n'est pas limitée aux modes de mise en œuvre et de réalisation qui viennent d'être décrits mais en embrasse toutes les variantes.

Si l'architecture n'est pas du type « dual issue », on peut utiliser un jeu d'instructions spécifiques ayant une valeur sémantique nulle vis-à-vis du processeur PR et contenant ladite instruction complémentaire utilisée pour délivrer l'adresse auxiliaire cible.

Ce jeu d'instructions spécifiques, et notamment ladite instruction complémentaire, est prédéfini pour ladite unité auxiliaire de traitement compte tenu notamment de son architecture matérielle.

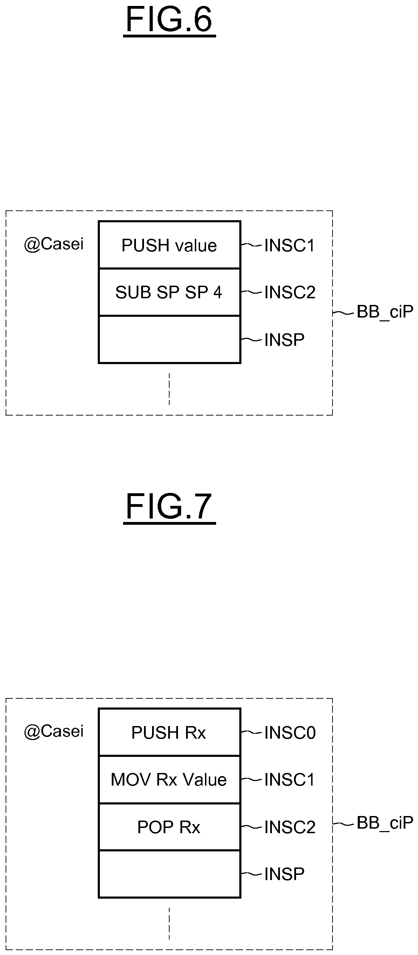

C'est le cas dans l'exemple illustré sur la figure 6.

Dans cet exemple, le compilateur génère dans le code programme principal CPR, au début de chaque bloc basique principal cible BB_ciP, c'est-à-dire à l'adresse @Casei, l'instruction complémentaire INSC1 contenant par exemple une instruction « PUSH value » qui empile la valeur « value » dans une pile gérée dans le sens des adresses croissantes, cette valeur « value » étant l'adresse auxiliaire cible du bloc basique auxiliaire cible correspondant à ce bloc basique principal cible.

Puis, cette instruction INSC1 est suivie d'une instruction INSC2 du type « SUB SP SP 4 » qui permet d'effacer cette valeur de ladite pile gérée ici dans le sens des adresses croissantes. De ce fait, les deux instructions INSC1 et INSC2 sont transparentes pour le processeur PR.

La ou les autres instructions principales INSP du bloc basique principal cible BB_ciP suivent alors l'instruction INSC2.

Si empiler une valeur immédiate n'est pas possible, on peut alors utiliser un registre et dans ce cas, comme illustré sur la figure 7, on sauvegarde tout d'abord sa valeur initiale sur la pile (mémoire) par une instruction INSCO, générée par le compilateur au début de chaque bloc basique principal cible BB_ciP, c'est-à-dire à l'adresse @Casei, du type « PUSH Rx » puis on fait suivre cette instruction INSC0 par une instruction INSC1 du type « MOV Rx value » c'est-à-dire une instruction qui met la valeur souhaitée « value » dans le registre Rx, cette valeur souhaitée étant l'adresse auxiliaire cible. Cette instruction du type « MOV Rx value » est ici ladite instruction complémentaire prédéfinie que va traiter l'unité de traitement auxiliaire.

Enfin, on fait suivre l'instruction INSC1 par une instruction INSC2 du type « POP Rx » qui dépile dans le registre Rx la valeur précédemment empilée pour revenir dans le même état.

Là encore, ce jeu prédéfini de trois instructions a une sémantique nulle vis-à-vis du processeur PR.

La ou les autres instructions principales INSP du bloc basique principal cible BB_ciP suivent alors l'instruction INSC2.

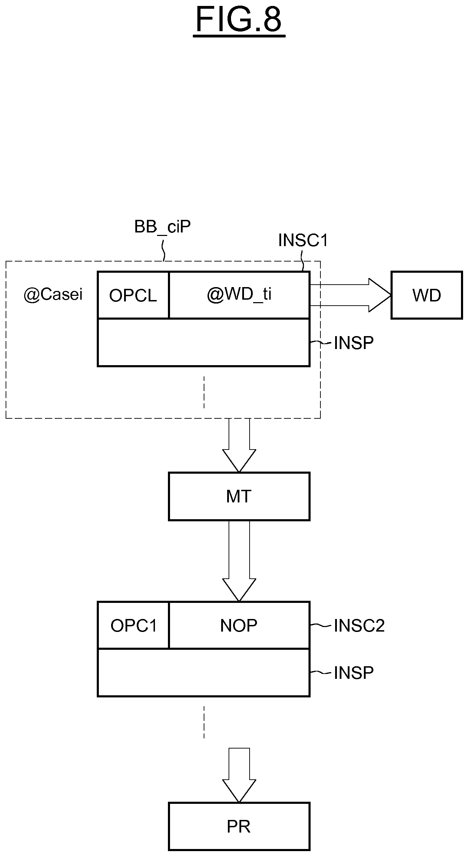

Une autre possibilité est illustrée sur la figure 8.

Toujours dans le cas où chaque emplacement mémoire de la mémoire principale peut stocker une seule instruction, et dans le cas où il y a au moins un code d'opération (opcode) libre, c'est-à-dire non utilisé par le processeur PR, les moyens de génération MGN du compilateur peuvent générer, au début de chaque bloc basique principal cible BB_ciP, c'est-à-dire à l'adresse @Casei, une instruction complémentaire INSC1 utilisant ce code d'opération libre OPCL et contenant l'information de synchronisation @WD_ti, qui va permettre au coprocesseur WD de récupérer l'adresse auxiliaire cible correspondante.

La ou les autres instructions principales INSP du bloc basique principal cible BB_ciP suivent alors l'instruction INSC1.

Puis, on prévoit d'insérer, par exemple en amont du processeur PR ou à l'intérieur du processeur en amont de l'unité arithmétique et logique, un module de traitement MT, logiciel et/ou matériel, qui remplace le code d'opération OPCL par un code d'opération spécifique OPC1 correspondant à une non opération (NOP en langue anglaise) de façon à faire délivrer cette nouvelle instruction INSC2 au processeur PR qui de ce fait n'effectuera aucune opération. Bien entendu ce module de traitement MT est configuré pour ne pas modifier les codes opérations des autres instructions principales INSP du bloc basique principal cible qui suivent alors l'instruction INSC2.

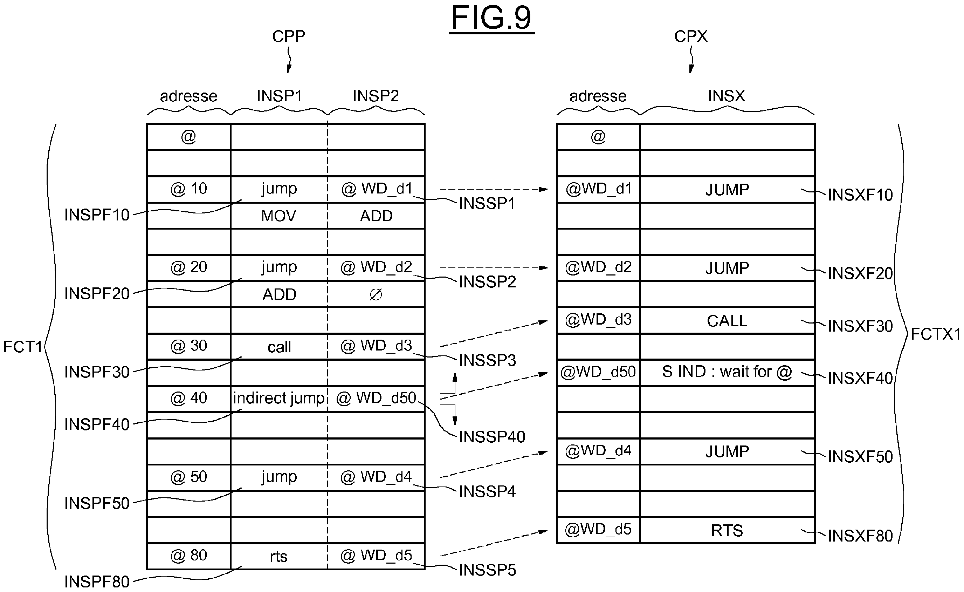

On se réfère maintenant plus particulièrement aux figures 9 et suivantes pour traiter des branchements indirects non prédictibles, en particulier des instructions de sauts indirects non prédictibles, mais également des instructions d'appels (« call ») indirects de fonctions.

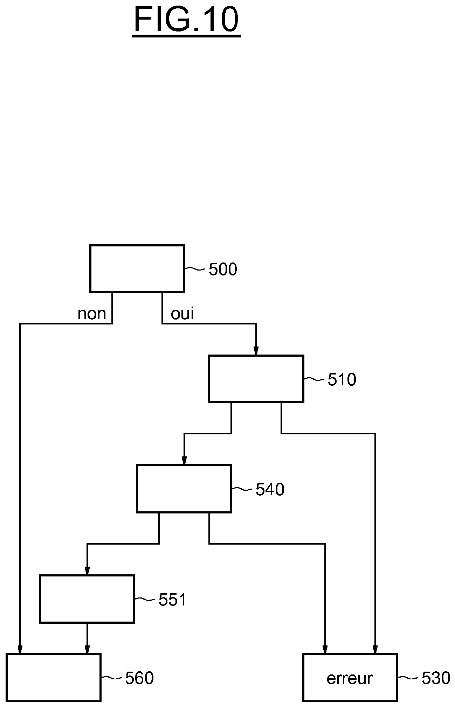

Sur les figures 9 et 10 on illustre un exemple de traitement d'une instruction de saut indirect non prédictible.

Sur la figure 9 l'architecture est là encore une architecture du type « dual issue ».

Par analogie avec la figure 4, la partie gauche de la figure 9 représente schématiquement les paires d'instructions INSP1, INSP2 délivrées par la mémoire principale MP ainsi que leur adresse @ dans la mémoire principale tandis que la partie droite de la figure 9 représente les instructions auxiliaires INSX avec leur adresse @ dans la mémoire auxiliaire.

Un code programme est généralement découpée en fonctions comportant en pratique une fonction de base et une ou plusieurs fonctions secondaires (sous-programmes), chaque fonction secondaire étant susceptible d'être appelée par la fonction de base ou par une fonction secondaire.

Une instruction principale saut indirect INSPF40 est incorporée à l'adresse @40 dans une fonction FCT1 du code programme principal CPP.

Cette fonction peut être une fonction principale ou bien une fonction secondaire.

La fonction FCT1 comporte une instruction principale de retour INSPF80.

De même une instruction auxiliaire de saut indirect INSXF40 est incorporée à l'adresse @WD_d50 dans une fonction FCTX1 du code programme auxiliaire CPX qui comporte également une instruction auxiliaire de retour INSXF80.

Les branchements auxiliaires potentiels résultant de l'exécution de l'instruction auxiliaire de saut indirect INSXF40 et les branchements principaux potentiels résultant de l'exécution de l'instruction principale de saut indirect INSPF40 sont non prédictibles.

En d'autres termes en fonction par exemple de la valeur d'un paramètre elle-même dépendante de l'exécution du code programme principal, les branchements de l'instruction INSPF40 peuvent pointer à n'importe quelle adresse dans la fonction FCT1.

Aussi les moyens de génération MGN sont-ils configurés pour insérer au moins une information de synchronisation destinée à être traitée par l'unité de traitement auxiliaire pour permettre au moins une synchronisation entre ladite instruction principale de retour INSPF80 et ladite instruction auxiliaire de retour INSXF80.

Cela étant la fonction FCT1 du code programme principal peut comporter en outre une ou plusieurs instructions principale supplémentaires de branchement INSPF10, INSPF20, INSPF30, INSPF50. Ces instructions supplémentaires de branchements peuvent induire des branchements de tout type, c'est à dire être par exemple des instructions de saut mono-cible, ou bien des instructions de saut indirect multi-cibles prédictibles, ou bien des instructions de saut indirect à branchements non prédictibles ou encore des instructions d'appel.

De même la fonction FCTX1 du code programme auxiliaire comporte des instructions auxiliaires supplémentaires de branchement INSXF10, INSXF20, INSXF30, INSXF50.

Les moyens de génération MGN sont alors configurés pour insérer des informations de synchronisation destinées à être traitées par l'unité de traitement auxiliaire pour permettre des synchronisations entre ladite instruction principale de retour et ladite instruction auxiliaire de retour et entre chaque instruction principale supplémentaire de branchement et chaque instruction auxiliaire supplémentaire de branchement.

Par ailleurs il est également possible qu'à un instant donné l'instruction principale de saut indirect INSPF40 branche dans le bloc de base principal courant (celui se terminant par cette instruction principale de saut indirect INSPF40), par exemple entre l'adresse @30 et @40.

Les moyens de génération MGN sont alors configurés pour insérer également une information de synchronisation destinée à être traitées par l'unité de traitement auxiliaire pour permettre une synchronisation entre ladite instruction principale de saut indirect INSPF40 et ladite instruction auxiliaire de saut indirect INSXF40.

On augmente ainsi le nombre de points de synchronisation.

D'une façon générale, les moyens de génération sont configurés pour
associer les informations de synchronisation respectivement à l'instruction principale de retour, à ladite instruction principale de saut indirect et à chaque instruction principale supplémentaire de branchement et les faire désigner respectivement des adresses auxiliaires de destination dans la mémoire programme auxiliaire auxquelles sont respectivement stockées l'instruction auxiliaire de retour, ladite instruction auxiliaire de saut indirect et chaque instruction auxiliaire supplémentaire de branchement, et
configurer l'instruction auxiliaire de saut indirect INSXF40 pour, lors de son exécution, sélectionner le branchement auxiliaire associé à l'adresse auxiliaire de destination désignée par l'information de synchronisation délivrée par la mémoire principale postérieurement à la délivrance de l'instruction principale de saut indirect INSPF40.

Les instructions auxiliaires supplémentaires de branchement INSXF10, INSXF20, INSXF30, INSXF50 et l'instruction auxiliaire de retour INSXF80 sont générées par les moyens de génération MGN et sont placées aux adresses auxiliaires de destination @WD_d1, @WD_d2, @WD_d3, @WD_d4 et @WD_d5 désignées par les informations de synchronisation correspondantes.

L'instruction auxiliaire de saut indirect INSXF40 est quant à elle placée à l'adresse auxiliaire de destination @WD_d50 désignée par l'information de synchronisation correspondante.

Dans l'exemple décrit ici, ces informations de synchronisation sont contenues dans des instructions principales supplétives INSSP1-INSSP5 et INSSP40. Chaque instruction supplétive est en fait ici la deuxième instruction INSP2 de la paire d'instructions contenant soit l'instruction principale de retour INSPF80 soit l'une des instructions principales supplémentaires de branchement INSPF10, INSPF20, INSPF30, INSPF50, soit l'instruction principale de saut indirect INSPF40.

A cet égard, tout comme le compilateur peut repérer les instructions de saut indirect non prédictible puisque ces instructions sont labellisées, il peut repérer les instructions de retour et les instructions supplémentaires de branchement, également labellisées avec des labels différents. Et, bien entendu, dans cet exemple, il convient que la deuxième instruction INSP2 d'une paire d'instructions contenant soit l'instruction principale de saut indirect INSPF40 soit l'instruction principale de retour INSPF80 soit l'une des instructions principales supplémentaires de branchement INSPF10, INSPF20, INSPF30, INSPF50, soit une instruction vide de façon que les moyens de génération du compilateur puissent y insérer l'instruction supplétive INSSPi correspondante. Ceci est un paramètre de contrainte du programme du compilateur.

Chaque instruction supplétive INSSPi comporte un code d'opération (opcode) spécifique ainsi que l'adresse auxiliaire de destination @WD_di à laquelle le compilateur va placer l'instruction auxiliaire de retour INSXF80 ou l'instruction auxiliaire supplémentaire de branchement correspondante INSXF10-INSXF50 ou l'instruction auxiliaire de saut indirect INSXF40.

L'instruction auxiliaire de retour INSXF80 ou l'instruction auxiliaire supplémentaire de branchement correspondante INSXF10-INSXF50 comporte notamment un code opération spécifique.

Quant à l'instruction auxiliaire de saut indirect INSXF40 générée par les moyens de génération MGN du compilateur, elle est affectée d'un code opération (opcode) spécial correspondant à une opération spéciale que doit faire l'unité de traitement auxiliaire lorsqu'elle traite ce code opération, à savoir une attente de la délivrance de l'information de synchronisation délivrée par la mémoire principale permettant de savoir vers quelle instruction auxiliaire supplémentaire de branchement INSXF10-INSXF50 sauter ou si elle doit sauter vers l'instruction auxiliaire de retour INSXF80 ou si elle doit rester à l'adresse @WD_50.

Dans le cas présent, cette opération spéciale, référencée « Wait for @ » est codée en dur dans le coprocesseur WD, et ce dernier, lorsqu'il va exécuter l'instruction auxiliaire de saut indirect INSXF40 affectée de ce code opération spécial, va attendre l'information de synchronisation, en l'espèce l'adresse auxiliaire de destination @WD_di, encodée dans un jeu ultérieur d'instructions disponible sur le bus BS1.

Il convient de noter ici qu'en d'autres termes, le processeur auxiliaire ne tient compte des instructions supplétives que lorsqu'il est dans le mode d'attente d'une instruction supplétive.

Ainsi lors de l'exécution du code, on peut rencontrer des instructions de branchements avant que l'instruction de saut indirect ne soit exécutée, et dans ce cas le processeur auxiliaire ne teient pas compte des instructions supplétives associées à ces instructions de branchement puisqu'il n'est pas alors dans un mode d'attente d'une instruction supplétive.

On se réfère maintenant plus particulièrement à la figure 10 pour décrire un exemple de gestion d'une instruction de saut indirect non prédictible.

Si dans l'étape 500, l'instruction auxiliaire en cours d'exécution n'est pas une instruction de saut indirect non prédictible du type par exemple de l'instruction INSXF40, alors la gestion classique de surveillance du flot de contrôle du processeur se poursuit de façon normale (étape 560).

Si par contre l'instruction en cours d'exécution est une instruction auxiliaire de saut indirect non prédictible (par exemple l'instruction INSXF40), alors conformément à ce qui a été décrit ci-avant, le coprocesseur WD attend l'adresse auxiliaire de destination @WD_di encodée dans l'instruction INSSPi de la paire d'instructions qui doit être disponible ultérieurement sur le bus BS1 (étape 510).

Si le retard de cycles excède un retard prédéterminé compte tenu de la taille des blocs basiques, et qu'aucune adresse auxiliaire de destination n'est disponible, alors le coprocesseur WD émet un signal d'erreur (étape 530).

Si par contre avant l'expiration du retard prédéterminé, une instruction supplétive INSSPi est présente dans le paquet d'instructions extrait de la mémoire MP, alors le coprocesseur extrait l'adresse auxiliaire de destination @WD_di de l'instruction INSSPi et saute alors à l'adresse auxiliaire de destination ainsi désignée puis vérifie le code opération (opcode) de l'instruction auxiliaire ainsi atteinte supposée être une instruction auxiliaire de retour ou une instruction auxiliaire supplémentaire de branchement (étape 540).

Si par exemple le code d'opération est erroné alors on repasse à l'étape 530 avec émission d'un message d'erreur.

Dans le cas contraire, le co-processeur WD exécute dans l'étape 551 l'instruction atteinte (instruction auxiliaire de retour ou une instruction auxiliaire supplémentaire de branchement) et la gestion classique de surveillance du flot de contrôle du processeur se poursuit de façon normale (étape 560).

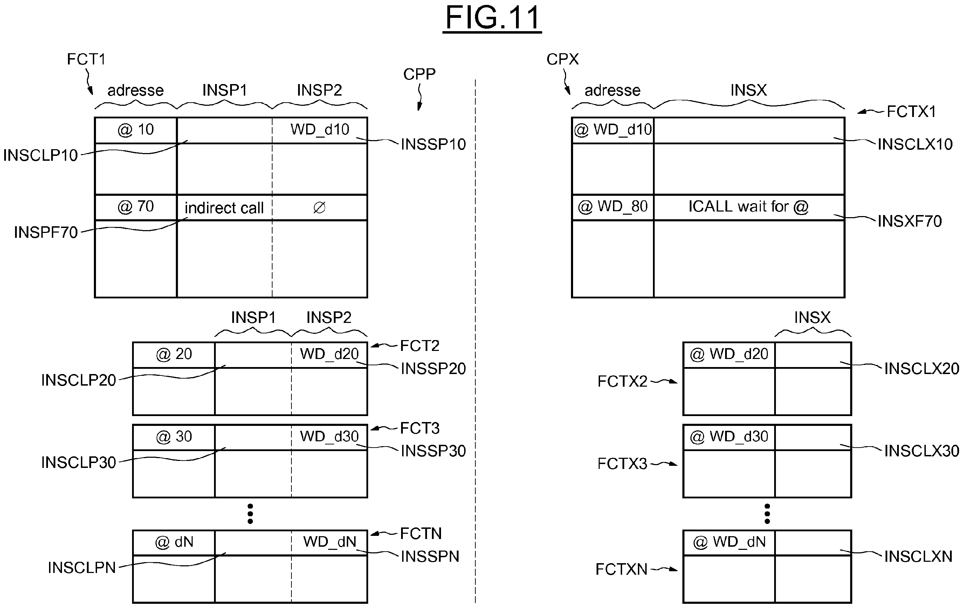

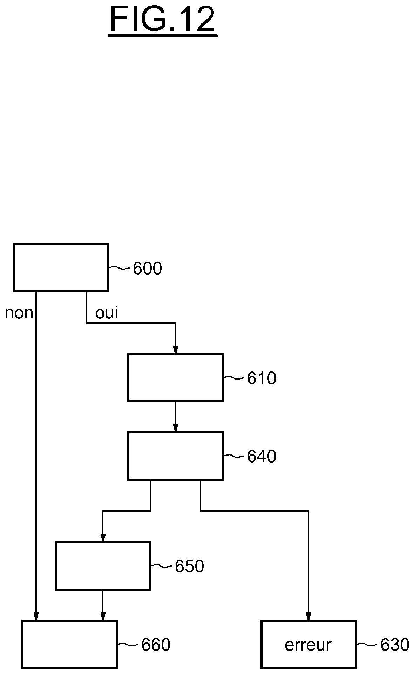

Sur les figures 11 et 12 on illustre un exemple de traitement d'une instruction d'appel indirect (« call ») non prédictible.

Sur la figure 11 l'architecture est là encore une architecture du type « dual issue ».

Par analogie avec la figure 4, la partie gauche de la figure 11 représente schématiquement les paires d'instructions INSP1, INSP2 délivrées par la mémoire principale MP ainsi que leur adresse @ dans la mémoire principale tandis que la partie droite de la figure 11 représente les instructions auxiliaires INSX avec leur adresse @ dans la mémoire auxiliaire.

Comme indiqué précédemment, un code programme est généralement découpé en fonctions comportant en pratique une fonction de base et une ou plusieurs fonctions secondaires (sous-programmes), chaque fonction secondaire étant susceptible d'être appelée par la fonction de base ou par une fonction secondaire.

Par ailleurs une fonction, quelle soit de base ou secondaire, peut s'appeler elle-même.

Une instruction principale d'appel indirect INSPF70 est incorporée à l'adresse @70 dans une fonction FCT1 du code programme principal CPP.

Cette fonction peut être une fonction principale ou bien une fonction secondaire.

Une instruction auxiliaire d'appel INSXF70 est incorporée à l'adresse @WD_80 dans une fonction FCTX1 du code programme auxiliaire CPX.

Le code programme principal comporte plusieurs autres fonctions FCT2-FCTN et le code programme auxiliaire comporte plusieurs autres fonctions FCTX2-FCTXN.

Les moyens de génération MGN sont configurés pour insérer des informations de synchronisation destinées à être traitées par l'unité de traitement auxiliaire et configurées pour permettre des synchronisations respectives entre les entrées de toutes les fonctions FCT1-FCTN du code programme principal et les entrées de toutes les fonctions FCTX1-FCTXN du code programme auxiliaire.

D'une façon générale, les moyens de génération MGN sont configurés pour
associer les informations de synchronisation respectivement aux instructions initiales de toutes les fonctions du code programme principal et les faire désigner respectivement des adresses auxiliaires de destination dans la mémoire programme auxiliaire auxquelles sont respectivement stockées les instructions initiales de toutes les fonctions du code programme auxiliaire, et
configurer ladite au moins une instruction auxiliaire d'appel INSXF70 pour, lors de son exécution, sélectionner le branchement auxiliaire associé à l'adresse auxiliaire de destination désignée par l'information de synchronisation délivrée par la mémoire principale postérieurement à la délivrance de l'instruction principale d'appel INSPF70.

Les instructions auxiliaires initiales INSCLX10-INSCLXN des fonctions FCTX1-FCTXN sont générées par les moyens de génération MGN et sont placées aux adresses auxiliaires de destination @WD_d10, @WD_d20, .... @WD_dN désignées par les informations de synchronisation correspondantes.

Dans l'exemple décrit ici, ces informations de synchronisation sont contenues dans des instructions principales supplétives INSSP10-INSSPN. Chaque instruction supplétive est en fait ici la deuxième instruction INSP2 de la paire d'instructions initiales d'une fonction FCTi du code programme principal, la première instruction initiale INSCLP10-INSCLPN de cette paire étant destinée à l'unité de traitement principale.

A cet égard, le compilateur peut repérer les instructions d'appel indirect puisque ces instructions sont labellisées. Et, bien entendu, dans cet exemple, il convient que la deuxième instruction INSP2 d'une paire d'instructions initiales d'une fonction, soit une instruction vide de façon que les moyens de génération du compilateur puissent y insérer l'instruction supplétive INSSPi correspondante. Ceci est un paramètre de contrainte du programme du compilateur.

Chaque instruction supplétive INSSPi comporte un code d'opération (opcode) spécifique ainsi que l'adresse auxiliaire de destination @WD_di à laquelle le compilateur va placer l'instruction auxiliaire initiale correspondante INSCLX10-INSCLXN, c'est-à-dire faire débuter la fonction FCTXi correspondante.

L'instruction auxiliaire initiale INSCLXi comporte notamment un code opération spécifique.

Quant à l'instruction auxiliaire d'appel indirect INSXF70 générée par les moyens de génération MGN du compilateur, elle est affectée d'un code opération (opcode) spécial correspondant à une opération spéciale que doit faire l'unité de traitement auxiliaire lorsqu'elle traite ce code opération, à savoir une attente de la délivrance de l'information de synchronisation délivrée par la mémoire principale permettant de savoir vers quelle instruction auxiliaire initiale INSCLX10-INSCLXN sauter.

Dans le cas présent, cette opération spéciale, référencée « Wait for @ » est codée en dur dans le coprocesseur WD, et ce dernier, lorsqu'il va exécuter l'instruction auxiliaire d'appel indirect INSXF70 affectée de ce code opération spécial, va attendre l'information de synchronisation, en l'espèce l'adresse auxiliaire de destination @WD_di, encodée dans le prochain jeu d'instructions disponible sur le bus BS1.

On se réfère maintenant plus particulièrement à la figure 12 pour décrire un exemple de gestion d'une instruction d'appel indirect non prédictible.

Si dans l'étape 600, l'instruction auxiliaire en cours d'exécution n'est pas une instruction d'appel indirect du type par exemple de l'instruction INSXF70, alors la gestion classique de surveillance du flot de contrôle du processeur se poursuit de façon normale (étape 660).

Si par contre l'instruction en cours d'exécution est une instruction auxiliaire d'appel indirect (par exemple l'instruction INSXF70), alors conformément à ce qui a été décrit ci-avant, le coprocesseur WD attend l'adresse auxiliaire de destination @WD_di encodée dans l'instruction INSSPi de la prochaine paire d'instructions qui va être disponible ultérieurement sur le bus BS1 (étape 610).

Si une instruction supplétive INSSPi est présente dans le paquet d'instructions extrait de la mémoire MP, alors le coprocesseur extrait l'adresse auxiliaire de destination @WD_di de l'instruction INSSPi et saute alors à l'adresse auxiliaire de destination ainsi désignée puis vérifie le code opération (opcode) de l'instruction auxiliaire ainsi atteinte supposée être une instruction initiale d'une fonction (étape 640).

Si par exemple le code d'opération est erroné alors on passe à l'étape 630 avec émission d'un message d'erreur.

Si par contre l'instruction atteinte est une instruction initiale d'une fonction, le co-processeur WD exécute cette instruction initiale dans l'étape 650 et la gestion classique de surveillance du flot de contrôle du processeur se poursuit de façon normale (étape 660).

Si l'architecture n'est pas du type « dual issue », on peut utiliser un jeu d'instructions spécifiques ayant une valeur sémantique nulle vis-à-vis du processeur PR et contenant ladite instruction supplétive utilisée pour délivrer l'adresse auxiliaire cible.

Ce jeu d'instructions spécifiques, et notamment ladite instruction supplétive, est prédéfini pour ladite unité auxiliaire de traitement compte tenu notamment de son architecture matérielle.

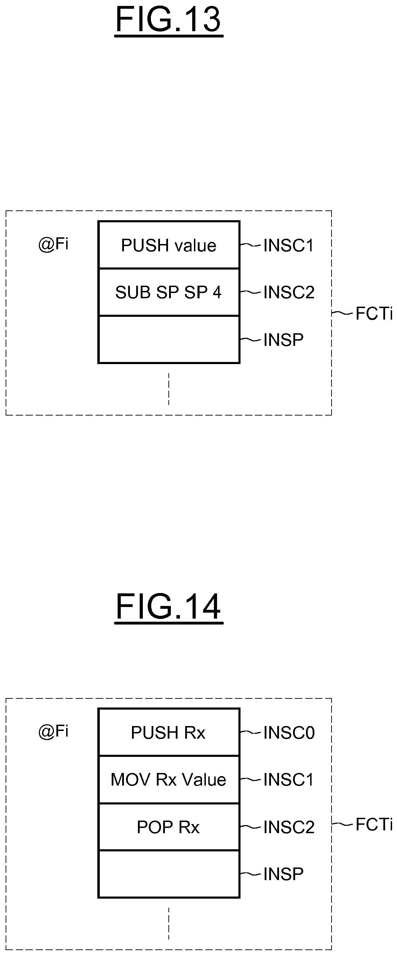

C'est le cas dans l'exemple illustré sur la figure 13.

Dans cet exemple, le compilateur génère dans le code programme principal CPP, au début de chaque fonction FCTi, c'est-à-dire à l'adresse @Fi, l'instruction supplétive INSC1 contenant par exemple une instruction « PUSH value » qui empile la valeur « value » dans une pile gérée dans le sens des adresses croissantes, cette valeur « value » étant l'adresse auxiliaire de destination à laquelle débute la fonction FCTXi du code programme auxiliaire.

Puis, cette instruction INSC1 est suivie d'une instruction INSC2 du type « SUB SP SP 4 » qui permet d'effacer cette valeur de ladite pile gérée ici dans le sens des adresses croissantes. De ce fait, les deux instructions INSC1 et INSC2 sont transparentes pour le processeur PR.

La ou les autres instructions principales INSP du code programme principal suivent alors l'instruction INSC2.

Si empiler une valeur immédiate n'est pas possible, on peut alors utiliser un registre et dans ce cas, comme illustré sur la figure 14, on sauvegarde tout d'abord sa valeur initiale sur la pile (mémoire) par une instruction INSC0, générée par le compilateur au début de chaque fonction FCTi, c'est-à-dire à l'adresse @Fi, du type « PUSH Rx » puis on fait suivre cette instruction INSC0 par une instruction INSC1 du type « MOV Rx value » c'est-à-dire une instruction qui met la valeur souhaitée « value » dans le registre Rx, cette valeur souhaitée étant l'adresse auxiliaire de destination. Cette instruction du type « MOV Rx value » est ici ladite instruction supplétive prédéfinie que va traiter l'unité de traitement auxiliaire.

Enfin, on fait suivre l'instruction INSC1 par une instruction INSC2 du type « POP Rx » qui dépile dans le registre Rx la valeur précédemment empilée pour revenir dans le même état.

Là encore, ce jeu prédéfini de trois instructions a une sémantique nulle vis-à-vis du processeur PR.

La ou les autres instructions principales INSP du code programme principal suivent alors l'instruction INSC2.

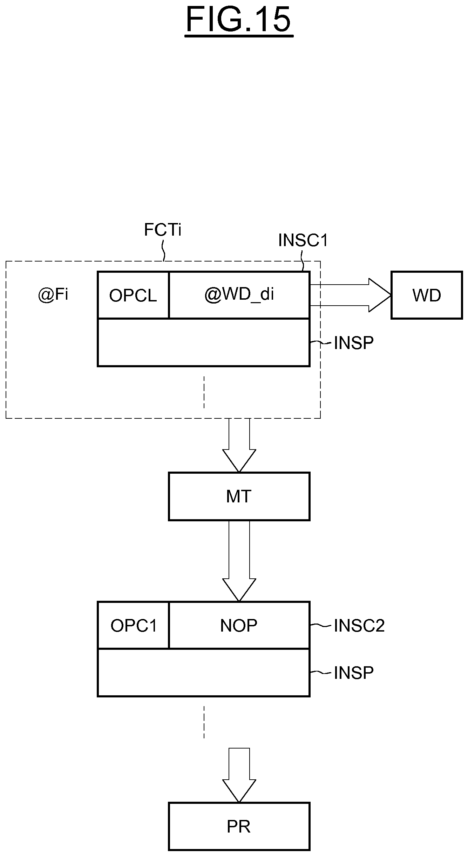

Une autre possibilité est illustrée sur la figure 15.

Toujours dans le cas où chaque emplacement mémoire de la mémoire principale peut stocker une seule instruction, et dans le cas où il y a au moins un code d'opération (opcode) libre, c'est-à-dire non utilisé par le processeur PR, les moyens de génération MGN du compilateur peuvent générer, au début de chaque fonction FCTi, c'est-à-dire à l'adresse @Fi, une instruction supplétive INSC1 utilisant ce code d'opération libre OPCL et contenant l'information de synchronisation @WD_di, qui va permettre au coprocesseur WD de récupérer l'adresse auxiliaire de destination correspondante.

La ou les autres instructions principales INSP du code programme principal suivent alors l'instruction INSC1.

Puis, on prévoit d'insérer, par exemple en amont du processeur PR ou à l'intérieur du processeur en amont de l'unité arithmétique et logique, un module de traitement MT, logiciel et/ou matériel, qui remplace le code d'opération OPCL par un code d'opération spécifique OPC1 correspondant à une non opération (NOP en langue anglaise) de façon à faire délivrer cette nouvelle instruction INSC2 au processeur PR qui de ce fait n'effectuera aucune opération. Bien entendu ce module de traitement MT est configuré pour ne pas modifier les codes opérations des autres instructions principales INSP du code programme principal qui suivent alors l'instruction INSC2.

Dans le cas où le code principal possède à la fois des instructions dont les branchements potentiels résultant de leur exécution sont prédictibles et des instructions dont les branchements potentiels résultant de leur exécution sont non prédictibles, les différentes implémentations décrites ci-avant peuvent être envisagées avec éventuellement des combinaisons au moins partielles possibles pouvant conduire à des optimisations.

Par exemple si une fonction contient un saut indirect non prédictible et un saut indirect prédictible, les instructions complémentaires liées au saut indirect prédictible pourraient être également utilisées en tant qu'instructions supplétives pour la synchronisation lors de l'exécution du saut non prédictible dans le cas où l'une de ces instructions complémentaires est rencontrée en premier.

## Revendications

1. Procédé de génération d'un code programme principal destiné à être exécuté par une unité de traitement principale et d'un code programme auxiliaire destiné à être exécuté par une unité de traitement auxiliaire pour une vérification du flot de contrôle du code programme principal, **caractérisé en ce que** la génération du code programme principal (CPP) comporte la génération d'au moins une instruction principale de branchement indirect (INSPF4), la génération du code programme auxiliaire (CPX) comprend une génération d'au moins une instruction auxiliaire de branchement indirect (INSXF4) associée à ladite au moins une instruction principale de branchement indirect, et la génération du code programme principal comprend en outre au moins une insertion d'au moins une information de synchronisation (@WD_ti) destinée à être traitée par l'unité de traitement auxiliaire (WD) et configurée pour permettre au moins une synchronisation entre une partie de code programme auxiliaire et une partie de code programme principal résultant respectivement de l'exécution de ladite au moins une instruction auxiliaire de branchement indirect (INSXF4) et de l'exécution de ladite au moins une instruction principale de branchement indirect (INSPF4).

2. Procédé selon la revendication 1, dans lequel les branchements auxiliaires potentiels résultant de l'exécution de ladite au moins une instruction auxiliaire de branchement indirect (INSXF4) et les branchements principaux potentiels résultant de l'exécution de ladite au moins une instruction principale de branchement indirect (INSPF4) sont prédictibles, et la génération du code programme principal comprend des insertions d'informations de synchronisation (@WD_ti) destinées à être traitées par l'unité de traitement auxiliaire (WD) et configurées pour permettre des synchronisations entre lesdits branchements auxiliaires potentiels résultant de l'exécution de ladite au moins une instruction auxiliaire de branchement indirect (INSXF4) et lesdits branchements principaux potentiels résultant de l'exécution de ladite au moins une instruction principale de branchement indirect (INSPF4).

3. Procédé selon la revendication 2, dans lequel le code programme auxiliaire est destiné à être stocké dans une mémoire auxiliaire (MX), le code programme principal est destiné à être stocké dans une mémoire principale (MP), lesdits branchement principaux potentiels pointent vers plusieurs adresses principales cibles (@Casel-@CaseN) de la mémoire principale, les informations de synchronisation (@WD_ti) sont respectivement associées à ces adresses principales cibles et désignent respectivement des adresses auxiliaires cibles (@WD_ti) dans la mémoire programme auxiliaire, et lesdits branchement auxiliaires potentiels pointent respectivement vers lesdites adresses auxiliaires cibles, et ladite au moins une instruction auxiliaire de branchement indirect (INSXF4) est configurée pour, lors de son exécution, sélectionner le branchement auxiliaire potentiel associé à l'adresse auxiliaire cible désignée par l'information de synchronisation délivrée par la mémoire principale postérieurement à la délivrance de l'instruction principale de branchement indirect (INSPF4).

4. Procédé selon la revendication 3, dans lequel la génération du code programme principal comprend une génération de blocs basiques principaux (BBiP) d'instructions principales comportant au moins un premier bloc basique principal (BB4P) se terminant par ladite instruction principale de branchement indirect (INSPF4) et plusieurs blocs basiques principaux cibles (BB_ciP) débutant respectivement auxdites adresses principales cibles (@Casei),
la génération du code programme auxiliaire comprend une génération de blocs basiques auxiliaires (BBix) d'instructions auxiliaires associés auxdits blocs basiques principaux et comportant au moins un premier bloc basique auxiliaire (BB4x) associé au premier bloc basique principal et se terminant par ladite instruction auxiliaire de branchement indirect (INSXF4) et plusieurs blocs basiques auxiliaires cibles (BB_ciX) débutant respectivement auxdites adresses auxiliaires cibles (@WD_ti),
la génération du code programme principal comportant en outre pour chaque bloc basique principal cible (BB_ciP) une insertion dans le code programme principal d'au moins une instruction principale complémentaire (INSCi) contenant ladite information de synchronisation désignant ladite adresse auxiliaire cible correspondante, et
ladite instruction auxiliaire de branchement indirect est configurée pour, lors de son exécution par l'unité de traitement auxiliaire, forcer cette unité de traitement auxiliaire à attendre (wait for @) la délivrance de l'une desdites adresses auxiliaires cibles.

5. Procédé selon la revendication 4, dans lequel chaque emplacement mémoire de la mémoire principale a une capacité de stockage de deux mots d'instructions, et la paire d'instructions située au début de chaque bloc basique principal cible comporte éventuellement une instruction principale cible du code programme principal destinée à l'unité de traitement principale et ladite instruction principale complémentaire (INSCi) destinée à l'unité de traitement auxiliaire et contenant l'adresse auxiliaire cible correspondante (@WD_ti).

6. Procédé selon la revendication 4, dans lequel chaque emplacement mémoire de la mémoire principale a une capacité de stockage d'un mot d'instruction, et chaque bloc principal cible débute par un jeu d'instructions (INSC1, INSC2) contenant ladite au moins instruction principale complémentaire (INSC1) et configurées pour fournir l'adresse auxiliaire cible correspondante à ladite unité de traitement auxiliaire et ayant ensemble une sémantique nulle vis-à-vis de l'unité de traitement principale.

7. Procédé selon la revendication 4, dans lequel chaque emplacement mémoire de la mémoire principale a une capacité de stockage d'un mot d'instruction, chaque instruction principale comporte un code opération, et chaque bloc principal cible débute par une instruction additionnelle, formant ladite instruction principale complémentaire (INSC1), contenant un code opération (OPCL) correspondant à une opération non utilisée par l'unité de traitement principale, destinée à l'unité de traitement auxiliaire et contenant l'adresse auxiliaire cible à fournir à ladite unité de traitement auxiliaire, le code opération (OPCL) de l'instruction additionnelle étant destinée à être remplacé par un code opération (OPC1) correspondant à une non opération (NOP) avant délivrance à l'unité de traitement principale de ladite instruction additionnelle (INSC2).

8. Procédé selon la revendication 1, dans lequel ladite au moins une instruction principale de branchement indirect est une instruction principale de saut indirect (INSPF40) incorporée dans une fonction (FCT1) du code programme principal comportant une instruction principale de retour (INSPF80), ladite au moins une instruction auxiliaire de branchement indirect est une instruction auxiliaire de saut indirect (INSXF40) incorporée dans une fonction (FCTX1) du code programme auxiliaire comportant une instruction auxiliaire de retour (INSXF80), les branchements auxiliaires potentiels résultant de l'exécution de ladite au moins une instruction auxiliaire de saut indirect (INSXF40) et les branchements principaux potentiels résultant de l'exécution de ladite au moins une instruction principale de saut indirect (INSPF40) sont non prédictibles, et ladite au moins une information de synchronisation (@WD_d5) destinée à être traitée par l'unité de traitement auxiliaire est configurée pour permettre au moins une synchronisation entre ladite instruction principale de retour (INSPF80) et ladite instruction auxiliaire de retour (INSXF80).

9. Procédé selon la revendication 8, dans lequel ladite fonction du code programme principal comporte en outre au moins une instruction principale supplémentaire de branchement (INSPF10), ladite fonction du code programme auxiliaire comporte en outre au moins une instruction auxiliaire supplémentaire de branchement (INSXF10), et la génération du code programme principal comprend des insertions d'informations de synchronisation (@WD_di) destinées à être traitées par l'unité de traitement auxiliaire et configurées pour permettre des synchronisations entre ladite instruction principale de retour et ladite instruction auxiliaire de retour, entre ladite au moins une instruction principale de saut indirect (INSXP40) et ladite au moins une instruction auxiliaire de saut indirect (INSXF40), et entre chaque instruction principale supplémentaire de branchement et chaque instruction auxiliaire supplémentaire de branchement.

10. Procédé selon la revendication 9, dans lequel le code programme auxiliaire est destiné à être stocké dans une mémoire auxiliaire (MX), le code programme principal est destiné à être stocké dans une mémoire principale (MP), les informations de synchronisation sont respectivement associées à l'instruction principale de retour, à ladite au moins une instruction principale de saut indirect (INSXP40) et à chaque instruction principale supplémentaire de branchement et désignent respectivement des adresses auxiliaires de destination (@WD_di) dans la mémoire programme auxiliaire auxquelles sont respectivement stockées l'instruction auxiliaire de retour, ladite au moins une instruction auxiliaire de saut indirect (INSXF40) et chaque instruction auxiliaire supplémentaire de branchement, et ladite au moins une instruction auxiliaire de saut indirect (INSXF40) est configurée pour, lors de son exécution, sélectionner le branchement auxiliaire associé à l'adresse auxiliaire de destination désignée par l'information de synchronisation délivrée par la mémoire principale postérieurement à la délivrance de l'instruction principale de saut indirect (INSPF40).

11. Procédé selon la revendication 10, dans lequel la génération du code programme principal comprend pour ladite instruction principale de retour, ladite au moins une instruction principale de saut indirect (INSXF40) et chaque instruction principale supplémentaire de branchement, une insertion dans le code programme principal d'au moins une instruction principale supplétive (INSSPi) contenant l'information de synchronisation correspondante désignant l'adresse auxiliaire de destination correspondante, et ladite au moins une instruction auxiliaire de saut indirect (INSXF40) est configurée pour, lors de son exécution par l'unité de traitement auxiliaire, forcer cette unité de traitement auxiliaire à attendre (wait for @) la délivrance de l'une desdites adresses auxiliaires de destination.

12. Procédé selon la revendication 11, dans lequel chaque emplacement mémoire de la mémoire principale a une capacité de stockage de deux mots d'instructions, et toute paire d'instructions comportant soit une instruction principale supplémentaire de branchement soit une instruction principale de retour, soit une instruction principale de saut indirect contient également ladite instruction principale supplétive correspondante (INSSPi) destinée à l'unité de traitement auxiliaire et contenant l'adresse auxiliaire de destination correspondante.

13. Procédé selon la revendication 1, dans lequel ladite au moins une instruction principale de branchement indirect est une instruction principale d'appel (INSPF70) incorporée dans une fonction (FCT1) du code programme principal, ladite au moins une instruction auxiliaire de branchement indirect est une instruction auxiliaire d'appel (INSXF70) incorporée dans une fonction (FCTX1) du code programme auxiliaire, le code programme principal comporte plusieurs autres fonctions (FCT2-FCTN) et le code programme auxiliaire comporte plusieurs autres fonctions (FCTX2-FCTXN), et la génération du code programme principal comprend des insertions d'informations de synchronisation destinées à être traitées par l'unité de traitement auxiliaire et configurées pour permettre des synchronisations respectives entre les entrées de toutes les fonctions du code programme principal et les entrées de toutes les fonctions du code programme auxiliaire.

14. Procédé selon la revendication 13, dans lequel le code programme auxiliaire est destiné à être stocké dans une mémoire auxiliaire (MX), le code programme principal est destiné à être stocké dans une mémoire principale (MP), les informations de synchronisation sont respectivement associées aux instructions initiales de toutes les fonctions du code programme principal et désignent respectivement des adresses auxiliaires de destination dans la mémoire programme auxiliaire auxquelles sont respectivement stockées les instructions auxiliaires initiales (INSCLX20-INSCLXN) de toutes les fonctions du code programme auxiliaire, et ladite au moins une instruction auxiliaire d'appel (INSXF70) est configurée pour, lors de son exécution, sélectionner le branchement auxiliaire associé à l'adresse auxiliaire de destination désignée par l'information de synchronisation délivrée par la mémoire principale postérieurement à la délivrance de l'instruction principale d'appel (INSPF70).

15. Procédé selon la revendication 14, dans lequel la génération du code programme principal comprend pour chaque fonction du code programme principal, une insertion dans le code programme principal d'au moins une instruction principale supplétive (INSSPi) associée à l'instruction initiale (INSCLPi) de cette fonction et contenant l'information de synchronisation correspondante désignant l'adresse auxiliaire de destination correspondante, et ladite au moins une instruction auxiliaire d'appel est configurée pour, lors de son exécution par l'unité de traitement auxiliaire, forcer cette unité de traitement auxiliaire à attendre (wait for @) la délivrance de l'une desdites adresses auxiliaires de destination.

16. Procédé selon la revendication 15, dans lequel chaque emplacement mémoire de la mémoire principale a une capacité de stockage de deux mots d'instructions, et la paire d'instructions située au début de chaque fonction du code programme principal comporte une instruction principale du code programme principal destinée à l'unité de traitement principale et ladite instruction principale supplétive (INSSPi) destinée à l'unité de traitement auxiliaire et contenant l'adresse auxiliaire de destination correspondante.

17. Procédé selon la revendication 15, dans lequel chaque emplacement mémoire de la mémoire principale a une capacité de stockage d'un mot d'instruction, et chaque fonction du code programme principal débute par un jeu d'instructions (INSC1, INSC2) contenant ladite au moins une instruction principale supplétive (INSC1) et configurées pour fournir l'adresse auxiliaire de destination correspondante à ladite unité de traitement auxiliaire et ayant ensemble une sémantique nulle vis-à-vis de l'unité de traitement principale.

18. Procédé selon la revendication 15, dans lequel chaque emplacement mémoire de la mémoire principale a une capacité de stockage d'un mot d'instruction, chaque instruction principale comporte un code opération, et chaque fonction du code programme principal débute par une instruction additionnelle, formant ladite instruction principale supplétive (INSC1), contenant un code opération (OPCL) correspondant à une opération non utilisée par l'unité de traitement principale, destinée à l'unité de traitement auxiliaire et contenant l'adresse auxiliaire de destination à fournir à ladite unité de traitement auxiliaire, le code opération (OPCL) de l'instruction additionnelle étant destinée à être remplacé par un code opération (OPC1) correspondant à une non opération (NOP) avant délivrance à l'unité de traitement principale de ladite instruction additionnelle (INSC2).

19. Procédé selon l'une des revendications précédentes, dans lequel le code programme auxiliaire (CPX) est configuré pour effectuer une vérification avec signatures disjointes du flot de contrôle du code programme principal (CPP).

20. Outil informatique, comprenant des moyens de génération (MGN) configurés pour générer un code programme principal (CPP) destiné à être exécuté par une unité de traitement principale (PR) et un code programme auxiliaire (CPX) destiné à être exécuté par une unité de traitement auxiliaire (WD) pour une vérification du flot de contrôle du code programme principal, **caractérisé en ce que** les moyens de génération (MGN) sont configurés pour générer au moins une instruction principale de branchement indirect (INSPF4), au moins une instruction auxiliaire de branchement indirect (INSXF4) associée à ladite au moins une instruction principale de branchement indirect et pour insérer au moins une information de synchronisation (@WD_ti) destinée à être traitées par l'unité de traitement auxiliaire et configurée pour permettre au moins une synchronisation entre une partie de code programme auxiliaire et une partie de code programme principal résultant respectivement de l'exécution ladite au moins une instruction auxiliaire de branchement indirect et de l'exécution ladite au moins une instruction principale de branchement indirect.

21. Outil informatique selon la revendication 20, dans lequel les branchements auxiliaires potentiels résultant de l'exécution de ladite au moins une instruction auxiliaire de branchement indirect et les branchements principaux potentiels résultant de l'exécution de ladite au moins une instruction principale de branchement indirect sont prédictibles, les moyens de génération (MGN) sont configurés pour insérer des informations de synchronisation (@WD_ti) destinées à être traitées par l'unité de traitement auxiliaire et configurées pour permettre des synchronisations entre les branchements auxiliaires potentiels destinés à être issus de l'exécution ladite au moins une instruction auxiliaire de branchement indirect et les branchements principaux potentiels destinés à être issus de l'exécution ladite au moins une instruction principale de branchement indirect.

22. Outil informatique selon la revendication 21, dans lequel le code programme auxiliaire est destiné à être stocké dans une mémoire auxiliaire (MX), le code programme principal est destiné à être stocké dans une mémoire principale (MP), les moyens de génération (MGN) sont configurés pour
- faire pointer lesdits branchements principaux potentiels vers plusieurs adresses principales cibles de la mémoire principale,
- associer les informations de synchronisation respectivement à ces adresses principales cibles et les faire désigner respectivement des adresses auxiliaires cibles dans la mémoire programme auxiliaire,
- faire pointer lesdits branchements auxiliaires potentiels respectivement vers lesdites adresses auxiliaires cibles, et
- configurer ladite au moins une instruction auxiliaire de branchement indirect pour, lors de son exécution, sélectionner le branchement auxiliaire potentiel associé à l'adresse auxiliaire cible désignée par l'information de synchronisation délivrée par la mémoire principale postérieurement à la délivrance de l'instruction principale de branchement indirect.

23. Outil informatique selon la revendication 22, dans lequel les moyens de génération (MGN) sont configurés pour générer
- des blocs basiques principaux d'instructions principales comportant au moins un premier bloc basique principal se terminant par ladite instruction principale de branchement indirect et plusieurs blocs basiques principaux cibles débutant respectivement auxdites adresses principales cibles,
- des blocs basiques auxiliaires d'instructions auxiliaires associés auxdits blocs basiques principaux et comportant au moins un premier bloc basique auxiliaire associé au premier bloc basique principal et se terminant par ladite instruction auxiliaire de branchement indirect et plusieurs blocs basiques auxiliaires cibles débutant respectivement auxdites adresses auxiliaires cibles,
et les moyens de génération sont en outre aptes à insérer dans le code programme principal pour chaque bloc basique principal cible, au moins une instruction principale complémentaire contenant ladite information de synchronisation désignant ladite adresse auxiliaire cible correspondante, et à configurer ladite instruction auxiliaire de branchement indirect pour, lors de son exécution par l'unité de traitement auxiliaire, forcer cette unité de traitement auxiliaire à attendre la délivrance de l'une desdites adresses auxiliaires cibles.

24. Outil informatique selon la revendication 23, dans lequel chaque emplacement mémoire de la mémoire principale a une capacité de stockage de deux mots d'instructions, et les moyens de génération (MGN) sont configurés pour générer la paire d'instructions située au début de chaque bloc basique principal cible de sorte qu'elle comporte éventuellement une instruction principale cible du code programme principal destinée à l'unité de traitement principale et ladite instruction principale complémentaire destinée à l'unité de traitement auxiliaire et contenant l'adresse auxiliaire cible correspondante.

25. Outil informatique selon la revendication 23, dans lequel chaque emplacement mémoire de la mémoire principale a une capacité de stockage d'un mot d'instruction, et les moyens de génération (MGN) sont configurés pour faire débuter chaque bloc principal cible, par un jeu d'instructions contenant ladite au moins une instruction principale complémentaire, et configurées pour fournir l'adresse auxiliaire cible correspondante à ladite unité de traitement auxiliaire et ayant ensemble une sémantique nulle vis-à-vis de l'unité de traitement principale.

26. Outil informatique selon la revendication 23, dans lequel chaque emplacement mémoire de la mémoire principale a une capacité de stockage d'un mot d'instruction, chaque instruction principale comporte un code opération et les moyens de génération (MGN) sont configurés pour faire débuter chaque bloc principal cible, par une instruction additionnelle, formant ladite instruction principale complémentaire, contenant un code opération correspondant à une opération non utilisée par l'unité de traitement principale, destinée à l'unité de traitement auxiliaire et contenant l'adresse auxiliaire cible à fournir à ladite unité de traitement auxiliaire.

27. Outil informatique selon la revendication 20, dans lequel ladite au moins une instruction principale de branchement indirect est une instruction principale de saut indirect incorporée dans une fonction du code programme principal comportant une instruction principale de retour, ladite au moins une instruction auxiliaire de branchement indirect est une instruction auxiliaire de saut indirect incorporée dans une fonction du code programme auxiliaire comportant une instruction auxiliaire de retour, les branchements auxiliaires potentiels résultant de l'exécution de ladite au moins une instruction auxiliaire de saut indirect et les branchements principaux potentiels résultant de l'exécution de ladite au moins une instruction principale de saut indirect sont non prédictibles, et les moyens de génération (MGN) sont configurés pour insérer ladite au moins une information de synchronisation destinée à être traitée par l'unité de traitement auxiliaire pour permettre au moins une synchronisation entre ladite instruction principale de retour et ladite instruction auxiliaire de retour.

28. Outil informatique selon la revendication 27, dans lequel ladite fonction du code programme principal comporte en outre au moins une instruction principale supplémentaire de branchement, ladite fonction du code programme auxiliaire comporte en outre au moins une instruction auxiliaire supplémentaire de branchement, et les moyens de génération (MGN) sont configurés pour insérer des informations de synchronisation destinées à être traitées par l'unité de traitement auxiliaire pour permettre des synchronisations entre ladite instruction principale de retour et ladite instruction auxiliaire de retour, entre ladite au moins une instruction principale de saut indirect et ladite au moins une instruction auxiliaire de saut indirect, et entre chaque instruction principale supplémentaire de branchement et chaque instruction auxiliaire supplémentaire de branchement.

29. Outil informatique selon la revendication 28, dans lequel le code programme auxiliaire est destiné à être stocké dans une mémoire auxiliaire (MX), le code programme principal est destiné à être stocké dans une mémoire principale (MP), les moyens de génération sont configurés pour
associer les informations de synchronisation respectivement à l'instruction principale de retour, à ladite au moins une instruction principale de saut indirect et à chaque instruction principale supplémentaire de branchement et les faire désigner respectivement des adresses auxiliaires de destination dans la mémoire programme auxiliaire auxquelles sont respectivement stockées l'instruction auxiliaire de retour, ladite au moins une instruction auxiliaire de saut indirect et chaque instruction auxiliaire supplémentaire de branchement, et
configurer ladite au moins une instruction auxiliaire de saut indirect pour, lors de son exécution, sélectionner le branchement auxiliaire associé à l'adresse auxiliaire de destination désignée par l'information de synchronisation délivrée par la mémoire principale postérieurement à la délivrance de l'instruction principale de saut indirect.

30. Outil informatique selon la revendication 29, dans lequel les moyens de génération (MGN) sont configurés pour insérer dans le code programme principal, pour ladite instruction principale de retour, ladite au moins une instruction principale de saut indirect et chaque instruction principale supplémentaire de branchement, au moins une instruction principale supplétive contenant l'information de synchronisation correspondante désignant l'adresse auxiliaire de destination correspondante, et
configurer ladite au moins une instruction auxiliaire de saut indirect pour, lors de son exécution par l'unité de traitement auxiliaire, forcer cette unité de traitement auxiliaire à attendre (wait for @) la délivrance de l'une desdites adresses auxiliaires de destination.

31. Outil informatique selon la revendication 30, dans lequel chaque emplacement mémoire de la mémoire principale a une capacité de stockage de deux mots d'instructions, et les moyens de génération (MGN) sont configurés pour incorporer dans toute paire d'instructions comportant soit ladite au moins une instruction principale de saut indirect, soit une instruction principale supplémentaire de branchement soit une instruction principale de retour, ladite instruction principale supplétive correspondante destinée à l'unité de traitement auxiliaire et contenant l'adresse auxiliaire de destination correspondante.

32. Outil informatique selon la revendication 20, dans lequel ladite au moins une instruction principale de branchement indirect est une instruction principale d'appel indirect incorporée dans une fonction du code programme principal, ladite au moins une instruction auxiliaire de branchement indirect est une instruction auxiliaire d'appel indirect incorporée dans une fonction du code programme auxiliaire, le code programme principal comporte plusieurs autres fonctions et le code programme auxiliaire comporte plusieurs autres fonctions, et les moyens de génération (MGN) sont configurés pour insérer des informations de synchronisation destinées à être traitées par l'unité de traitement auxiliaire et configurées pour permettre des synchronisations respectives entre les entrées de toutes les fonctions du code programme principal et les entrées de toutes les fonctions du code programme auxiliaire.

33. Outil informatique selon la revendication 32, dans lequel le code programme auxiliaire est destiné à être stocké dans une mémoire auxiliaire (MX), le code programme principal est destiné à être stocké dans une mémoire principale (MP), les moyens de génération sont configurés pour
associer les informations de synchronisation respectivement aux instructions principales initiales de toutes les fonctions du code programme principal et les faire désigner respectivement des adresses auxiliaires de destination dans la mémoire programme auxiliaire auxquelles sont respectivement stockées les instructions auxiliaires initiales de toutes les fonctions du code programme auxiliaire, et
configurer ladite au moins une instruction auxiliaire d'appel indirect pour, lors de son exécution, sélectionner le branchement auxiliaire associé à l'adresse auxiliaire de destination désignée par l'information de synchronisation délivrée par la mémoire principale postérieurement à la délivrance de l'instruction principale d'appel indirect.

34. Outil informatique selon la revendication 33, dans lequel les moyens de génération (MGN) sont configurés pour
insérer dans le code programme principal, pour chaque fonction du code programme principal, au moins une instruction principale supplétive associée à l'instruction principale initiale de cette fonction et contenant l'information de synchronisation correspondante désignant l'adresse auxiliaire de destination correspondante, et
configurer ladite au moins une instruction auxiliaire d'appel indirect pour, lors de son exécution par l'unité de traitement auxiliaire, forcer cette unité de traitement auxiliaire à attendre (wait for @) la délivrance de l'une desdites adresses auxiliaires de destination.

35. Outil informatique selon la revendication 34, dans lequel chaque emplacement mémoire de la mémoire principale a une capacité de stockage de deux mots d'instructions, et les moyens de génération (MGN) sont configurés pour générer la paire d'instructions située au début de chaque fonction du code programme principal de sorte qu'elle comporte une instruction principale du code programme principal destinée à l'unité de traitement principale et ladite instruction principale supplétive destinée à l'unité de traitement auxiliaire et contenant l'adresse auxiliaire de destination correspondante.

36. Outil informatique selon la revendication 34, dans lequel chaque emplacement mémoire de la mémoire principale a une capacité de stockage d'un mot d'instruction, et les moyens de génération sont configurés pour générer chaque fonction du code programme principal de sorte qu'elle débute par un jeu d'instructions (INSC1, INSC2) contenant ladite au moins une instruction principale supplétive (INSC1) et configurées pour fournir l'adresse auxiliaire de destination correspondante à ladite unité de traitement auxiliaire et ayant ensemble une sémantique nulle vis-à-vis de l'unité de traitement principale.

37. Outil informatique selon la revendication 34, dans lequel chaque emplacement mémoire de la mémoire principale a une capacité de stockage d'un mot d'instruction, chaque instruction principale comporte un code opération, et les moyens de génération sont configurés pour générer chaque fonction du code programme principal de sorte qu'elle débute par une instruction additionnelle, formant ladite instruction principale supplétive (INSC1), contenant un code opération (OPCL) correspondant à une opération non utilisée par l'unité de traitement principale, destinée à l'unité de traitement auxiliaire et contenant l'adresse auxiliaire de destination à fournir à ladite unité de traitement auxiliaire.

38. Outil informatique selon l'une des revendications 20 à 37, dans lequel les moyens de génération (MGN) sont configurés pour générer un code programme auxiliaire adapté pour effectuer une vérification avec signatures disjointes du flot de contrôle du code programme principal.

39. Système informatique, comprenant une unité de traitement principale (PR), une unité de traitement auxiliaire (WD), une mémoire principale (MP) couplée à l'unité de traitement principale et à l'unité de traitement auxiliaire et contenant un code programme principal (CPP) généré par le procédé selon l'une des revendications 1 à 19 ou par l'outil informatique selon l'une des revendications 20 à 38, et une mémoire auxiliaire (MX) couplée à l'unité de traitement auxiliaire et contenant un code programme auxiliaire (CPX) généré par le procédé selon l'une des revendications 1 à 19 ou par l'outil informatique selon l'une des revendications 20 à 38.

## Patentansprüche

1. Verfahren zur Erzeugung eines Hauptprogrammcodes, der dazu vorgesehen ist, von einer Hauptverarbeitungseinheit ausgeführt zu werden, und eines Hilfsprogrammcodes, der dazu vorgesehen ist, von einer Hilfsverarbeitungseinheit ausgeführt zu werden, zu einer Verifizierung des Kontrollflusses des Hauptprogrammcodes, **dadurch gekennzeichnet, dass** die Erzeugung des Hauptprogrammcodes (CPP) die Erzeugung von mindestens einem indirekten Hauptverzweigungsbefehl (INSPF4), die Erzeugung des Hilfsprogrammcodes (CPX) eine Erzeugung von mindestens einem indirekten Hilfsverzweigungsbefehl (INSXF4) umfasst, der mit dem mindestens einen indirekten Hauptverzweigungsbefehl assoziiert ist, und die Erzeugung des Hauptprogrammcodes weiterhin mindestens eine Einfügung von mindestens einer Synchronisationsinformation (@WD_ti) umfasst, die dazu vorgesehen ist, von der Hilfsverarbeitungseinheit (WD) verarbeitet zu werden, und zum Ermöglichen von mindestens einer Synchronisation zwischen einem Hilfsprogrammcodeteil und einem Hauptprogrammcodeteil konfiguriert ist, was zu der Ausführung des mindestens einen indirekten Hilfsverzweigungsbefehls (INSXF4) bzw. der Ausführung des mindestens einen indirekten Hauptverzweigungsbefehls (INSPF4) führt.

2. Verfahren nach Anspruch 1, wobei die potentiellen Hilfsverzweigungen, die aus der Ausführung des mindestens einen indirekten Hilfsverzweigungsbefehls (INSXF4) resultieren, und die potentiellen Hauptverzweigungen, die aus der Ausführung des mindestens einen indirekten Hauptverzweigungsbefehls (INSPF4) resultieren, vorhersagbar sind und die Erzeugung des Hauptprogrammcodes Einfügungen von Synchronisationsinformationen (@WD_ti) umfasst, die dazu vorgesehen sind, von der Hilfsverarbeitungseinheit (WD) verarbeitet zu werden, und zum Ermöglichen von Synchronisationen zwischen den potentiellen Hilfsverzweigungen, die aus der Ausführung des mindestens einen indirekten Hilfsverzweigungsbefehls (INSXF4) resultieren, und den potentiellen Hauptverzweigungen, die aus der Ausführung des mindestens einen indirekten Hauptverzweigungsbefehls (INSPF4) resultieren, konfiguriert sind.

3. Verfahren nach Anspruch 2, wobei der Hilfsprogrammcode dazu vorgesehen ist, in einem Hilfsspeicher (MX) gespeichert zu werden, der Hauptprogrammcode dazu vorgesehen ist, in einem Hauptspeicher (MP) gespeichert zu werden, die potentiellen Hauptverzweigungen auf mehrere Zielhauptadressen (@Case1-@CaseN) des Hauptspeichers zeigen, die Synchronisationsinformationen (@WD_ti) jeweils mit diesen Zielhauptadressen assoziiert sind und jeweils Zielhilfsadressen (@WD_ti) in dem Hilfsprogrammspeicher bezeichnen und die potentiellen Hilfsverzweigungen jeweils auf die Zielhilfsadressen zeigen und der mindestens eine indirekte Hilfsverzweigungsbefehl (INSXF4) während seiner Ausführung zum Auswählen der potentiellen Hilfsverzweigung konfiguriert ist, die mit der Zielhilfsadresse assoziiert ist, die von der Synchronisationsinformation bezeichnet wird, die von dem Hauptspeicher nach der Lieferung des indirekten Hauptverzweigungsbefehls (INSPF4) geliefert wird.

4. Verfahren nach Anspruch 3, wobei die Erzeugung des Hauptprogrammcodes eine Erzeugung von Hauptgrundblöcken (BBiP) von Hauptbefehlen umfasst, die mindestens einen ersten Hauptgrundblock (BB4P), der in dem indirekten Hauptverzweigungsbefehl (INSPF4) endet, und mehrere Zielhauptgrundblöcke (BB_ciP), die jeweils an den Zielhauptadressen (@Casei) beginnen, umfassen,
die Erzeugung des Hilfsprogrammcodes eine Erzeugung von Hilfsgrundblöcken (BBix) von Hilfsbefehlen umfasst, die mit den Hauptgrundblöcken assoziiert sind und mindestens einen ersten Hilfsgrundblock (BB4x), der mit dem ersten Hauptgrundblock assoziiert ist und in dem indirekten Hilfsverzweigungsbefehl (INSXF4) endet, und mehrere Zielhilfsgrundblöcke (BB_ciX), die jeweils an den Zielhilfsadressen (@WD_ti) beginnen, umfassen,
die Erzeugung des Hauptprogrammcodes weiterhin für jeden Zielhauptgrundblock (BB_ciP) eine Einfügung von mindestens einem komplementären Hauptbefehl (INSCi), der die Synchronisationsinformation enthält, die die entsprechende Zielhilfsadresse bezeichnet, umfasst und
der indirekte Hilfsverzweigungsbefehl während seiner Ausführung durch die Hilfsverarbeitungseinheit zum Zwingen dieser Hilfsverarbeitungseinheit, auf die Lieferung von einer der Zielhilfsadressen zu warten (wait for @), konfiguriert ist.

5. Verfahren nach Anspruch 4, wobei jeder Speicherplatz des Hauptspeichers eine Speicherkapazität von zwei Befehlswörtern aufweist und das Paar von Befehlen, das sich am Anfang jedes Zielhauptgrundblocks befindet, gegebenenfalls einen Zielhauptbefehl des Hauptprogrammcodes, der für die Hauptverarbeitungseinheit vorgesehen ist, und den komplementären Hauptbefehl (INSCi), der für die Hilfsverarbeitungseinheit vorgesehen ist und die entsprechende Zielhilfsadresse (@WD_ti) enthält, umfasst.

6. Verfahren nach Anspruch 4, wobei jeder Speicherplatz des Hauptspeichers eine Speicherkapazität von einem Befehlswort aufweist und jeder Zielhauptblock mit einem Befehlssatz (INSC1, INSC2) beginnt, der den mindestens einen komplementären Hauptbefehl (INSC1) enthält und zum Bereitstellen der entsprechenden Zielhilfsadresse an die Hilfsverarbeitungseinheit konfiguriert ist und zusammen eine Nullsemantik gegenüber der Hauptverarbeitungseinheit aufweist.

7. Verfahren nach Anspruch 4, wobei jeder Speicherplatz des Hauptspeichers eine Speicherkapazität von einem Befehlswort aufweist, jeder Hauptbefehl einen Operationscode umfasst und jeder Zielhauptblock mit einem zusätzlichen Befehl beginnt, der den komplementären Hauptbefehl (INSC1) bildet, einen Operationscode (OPCL) enthält, der einer von der Hauptverarbeitungseinheit nicht verwendeten Operation entspricht, für die Hilfsverarbeitungseinheit vorgesehen ist und die Zielhilfsadresse enthält, die der Hilfsverarbeitungseinheit bereitgestellt werden soll, wobei der Operationscode (OPCL) des zusätzlichen Befehls dazu vorgesehen ist, durch einen Operationscode (OPC1), der einer Nichtoperation (NOP) entspricht, vor Lieferung des zusätzlichen Befehls (INSC2) an die Hauptverarbeitungseinheit ersetzt zu werden.

8. Verfahren nach Anspruch 1, wobei der mindestens eine indirekte Hauptverzweigungsbefehl ein indirekter Hauptsprungbefehl (INSPF40) ist, der in eine Funktion (FCT1) des Hauptprogrammcodes integriert ist, die einen Hauptrücksprungbefehl (INSPF80) umfasst, der mindestens eine indirekte Hilfsverzweigungsbefehl ein indirekter Hilfssprungbefehl (INSXF40) ist, der in eine Funktion (FCTX1) des Hilfsprogrammcodes integriert ist, die einen Hilfsrücksprungbefehl (INSXF80) umfasst, wobei die potentiellen Hilfsverzweigungen, die aus der Ausführung des mindestens einen indirekten Hilfssprungbefehls (INSXF40) resultieren, und die potentiellen Hauptverzweigungen, die aus der Ausführung des mindestens einen indirekten Hauptsprungbefehls (INSPF40) resultieren, nicht vorhersagbar sind und die mindestens eine Synchronisationsinformation (@WD_d5), die dazu vorgesehen ist, von der Hilfsverarbeitungseinheit verarbeitet zu werden, zum Ermöglichen von mindestens einer Synchronisation zwischen dem Hauptrücksprungbefehl (INSPF80) und dem Hilfsrücksprungbefehl (INSXF80) konfiguriert ist.

9. Verfahren nach Anspruch 8, wobei die Funktion des Hauptprogrammcodes weiterhin mindestens einen supplementären Hauptverzweigungsbefehl (INSPF10) umfasst, die Funktion des Hilfsprogrammcodes weiterhin mindestens einen supplementären Hilfsverzweigungsbefehl (INSXF10) umfasst und die Erzeugung des Hauptprogrammcodes Einfügungen von Synchronisationsinformationen (@WD_di) umfasst, die dazu vorgesehen sind, von der Hilfsverarbeitungseinheit verarbeitet zu werden, und zum Ermöglichen von Synchronisationen zwischen dem Hauptrücksprungbefehl und dem Hilfsrücksprungbefehl, zwischen dem mindestens einen indirekten Hauptsprungbefehl (INSXP40) und dem mindestens einen indirekten Hilfssprungbefehl (INSXF40) und zwischen jedem supplementären Hauptverzweigungsbefehl und jedem supplementären Hilfsverzweigungsbefehl konfiguriert sind.

10. Verfahren nach Anspruch 9, wobei der Hilfsprogrammcode dazu vorgesehen ist, in einem Hilfsspeicher (MX) gespeichert zu werden, der Hauptprogrammcode dazu vorgesehen ist, in einem Hauptspeicher (MP) gespeichert zu werden, die Synchronisationsinformationen jeweils mit dem Hauptrücksprungbefehl, mit dem mindestens einen indirekten Hauptsprungbefehl (INSXP40) und mit jedem supplementären Hauptverzweigungsbefehl assoziiert sind und jeweils Zielorthilfsadressen (@WD_di) in dem Hilfsprogrammspeicher bezeichnen, an denen jeweils der Hilfsrücksprungbefehl, der mindestens eine indirekte Hilfssprungbefehl (INSXF40) und jeder supplementäre Hilfsverzweigungsbefehl gespeichert sind, und der mindestens eine indirekte Hilfssprungbefehl (INSXF40) während seiner Ausführung zum Auswählen der Hilfsverzweigung konfiguriert ist, die mit der Zielorthilfsadresse assoziiert ist, die von der Synchronisationsinformation bezeichnet wird, die von dem Hauptspeicher nach der Lieferung des indirekten Hauptsprungbefehls (INSPF40) geliefert wird.

11. Verfahren nach Anspruch 10, wobei die Erzeugung des Hauptprogrammcodes für den Hauptrücksprungbefehl, den mindestens einen indirekten Hauptsprungbefehl (INSXF40) und jeden supplementären Hauptverzweigungsbefehl eine Einfügung von mindestens einem ergänzenden Hauptbefehl (INSSPi) umfasst, der die entsprechende Synchronisationsinformation enthält, die die entsprechende Zielorthilfsadresse bezeichnet, und der mindestens eine indirekte Hilfssprungbefehl (INSXF40) während seiner Ausführung durch die Hilfsverarbeitungseinheit zum Zwingen dieser Hilfsverarbeitungseinheit, auf die Lieferung von einer der Zielorthilfsadressen zu warten (wait for @), konfiguriert ist.

12. Verfahren nach Anspruch 11, wobei jeder Speicherplatz des Hauptspeichers eine Speicherkapazität von zwei Befehlswörtern aufweist und jedes Paar von Befehlen entweder einen supplementären Hauptverzweigungsbefehl oder einen Hauptrücksprungbefehl oder einen indirekten Hauptsprungbefehl umfasst, der zudem den entsprechenden ergänzenden Hauptbefehl (INSSPi) enthält, der für die Hilfsverarbeitungseinheit vorgesehen ist und die entsprechende Zielorthilfsadresse enthält.

13. Verfahren nach Anspruch 1, wobei der mindestens eine indirekte Hauptverzweigungsbefehl ein Hauptaufrufbefehl (INSPF70) ist, der in eine Funktion (FCT1) des Hauptprogrammcodes integriert ist, der mindestens eine indirekte Hilfsverzweigungsbefehl ein Hilfsaufrufbefehl (INSXF70) ist, der in eine Funktion (FCTX1) des Hilfsprogrammcodes integriert ist, der Hauptprogrammcode mehrere andere Funktionen (FCT2-FCTN) umfasst und der Hilfsprogrammcode mehrere andere Funktionen (FCTX2-FCTXN) umfasst und die Erzeugung des Hauptprogrammcodes Einfügungen von Synchronisationsinformationen umfasst, die dazu vorgesehen sind, von der Hilfsverarbeitungseinheit verarbeitet zu werden, und zum Ermöglichen von jeweiligen Synchronisationen zwischen den Eingängen von allen Funktionen des Hauptprogrammodes und den Eingängen von allen Funktionen des Hilfsprogrammcodes konfiguriert sind.

14. Verfahren nach Anspruch 13, wobei der Hilfsprogrammcode dazu vorgesehen ist, in einem Hilfsspeicher (MX) gespeichert zu werden, der Hauptprogrammcode dazu vorgesehen ist, in einem Hauptspeicher (MP) gespeichert zu werden, die Synchronisationsinformationen jeweils mit den anfänglichen Befehlen von allen Funktionen des Hauptprogrammcodes assoziiert sind und jeweils Zielorthilfsadressen in dem Hilfsprogrammspeicher bezeichnen, an denen jeweils die anfänglichen Hilfsbefehle (INSCLX20-INSCLXN) von allen Funktionen des Hilfsprogrammcodes gespeichert sind, und der mindestens eine indirekte Hilfsaufrufbefehl (INSXF70) während seiner Ausführung zum Auswählen der Hilfsverzweigung konfiguriert ist, die mit der Zielorthilfsadresse assoziiert ist, die von der Synchronisationsinformation bezeichnet wird, die von dem Hauptspeicher nach der Lieferung des indirekten Hauptaufrufbefehls (INSPF70) geliefert wird.

15. Verfahren nach Anspruch 14, wobei die Erzeugung des Hauptprogrammcodes für jede Funktion des Hauptprogrammcodes eine Einfügung von mindestens einem ergänzenden Hauptbefehl (INSSPi) umfasst, der mit dem anfänglichen Befehl (INSCLPi) dieser Funktion assoziiert ist und die entsprechende Synchronisationsinformation enthält, die die entsprechende Zielorthilfsadresse bezeichnet, und der mindestens eine indirekte Hilfssprungbefehl während seiner Ausführung durch die Hilfsverarbeitungseinheit zum Zwingen dieser Hilfsverarbeitungseinheit, auf die Lieferung von einer der Zielorthilfsadressen zu warten (wait for @), konfiguriert ist.

16. Verfahren nach Anspruch 15, wobei jeder Speicherplatz des Hauptspeichers eine Speicherkapazität von zwei Befehlswörtern aufweist und das Paar von Befehlen, das sich am Anfang jeder Funktion des Hauptprogrammcodes befindet, einen Hauptbefehl des Hauptprogrammcodes, der für die Hauptverarbeitungseinheit vorgesehen ist, und den ergänzenden Hauptbefehl (INSSPi), für die Hilfsverarbeitungseinheit vorgesehen ist und die entsprechende Zielorthilfsadresse enthält, umfasst.

17. Verfahren nach Anspruch 15, wobei jeder Speicherplatz des Hauptspeichers eine Speicherkapazität von einem Befehlswort aufweist und jede Funktion des Hauptprogrammcodes mit einem Befehlssatz (INSC1, INSC2) beginnt, der den mindestens einen ergänzenden Hauptbefehl (INSC1) enthält und zum Bereitstellen der entsprechenden Zielorthilfsadresse an die Hilfsverarbeitungseinheit konfiguriert ist und zusammen eine Nullsemantik gegenüber der Hauptverarbeitungseinheit aufweist.

18. Verfahren nach Anspruch 15, wobei jeder Speicherplatz des Hauptspeichers eine Speicherkapazität von einem Befehlswort aufweist, jeder Hauptbefehl einen Operationscode umfasst und jede Funktion des Hauptprogrammcodes mit einem zusätzlichen Befehl beginnt, der den ergänzenden Hauptbefehl (INSC1) bildet, einen Operationscode (OPCL) enthält, der einer von der Hauptverarbeitungseinheit nicht verwendeten Operation entspricht, der für die Hilfsverarbeitungseinheit vorgesehen ist und die Zielorthilfsadresse enthält, die der Hilfsverarbeitungseinheit bereitgestellt werden soll, wobei der Operationscode (OPCL) des zusätzlichen Befehls dazu vorgesehen ist, durch einen Operationscode (OPC1), der einer Nichtoperation (NOP) entspricht, vor Lieferung des zusätzlichen Befehls (INSC2) an die Hauptverarbeitungseinheit ersetzt zu werden.

19. Verfahren nach einem der vorhergehenden Ansprüche, wobei der Hilfsprogrammcode (CPX) zum Bewirken einer Verifizierung des Kontrollflusses des Hauptprogrammcodes (CPP) mit getrennten Signaturen konfiguriert ist.

20. Datenverarbeitungsgerät, umfassend Erzeugungsmittel (MGN), die zur Erzeugung eines Hauptprogrammcodes (CPP), der dazu vorgesehen ist, von einer Hauptverarbeitungseinheit (PR) ausgeführt zu werden, und eines Hilfsprogrammcodes (CPX), der dazu vorgesehen ist, von einer Hilfsverarbeitungseinheit (WD) ausgeführt zu werden, zu einer Verifizierung des Kontrollflusses des Hauptprogrammcodes konfiguriert sind, **dadurch gekennzeichnet, dass** die Erzeugungsmittel (MGN) zum Erzeugen von mindestens einem indirekten Hauptverzweigungsbefehl (INSPF4), mindestens einem indirekten Hilfsverzweigungsbefehl (INSXF4), der mit dem mindestens einen indirekten Hauptverzweigungsbefehl assoziiert ist, und zum Einfügen von mindestens einer Synchronisationsinformation (@WD_ti) konfiguriert sind, die dazu vorgesehen ist, von der Hilfsverarbeitungseinheit verarbeitet zu werden, und zum Ermöglichen von mindestens einer Synchronisation zwischen einem Hilfsprogrammcodeteil und einem Hauptprogrammcodeteil konfiguriert ist, was zu der Ausführung des mindestens einen indirekten Hilfsverzweigungsbefehls bzw. der Ausführung des mindestens einen indirekten Hauptverzweigungsbefehls führt.

21. Datenverarbeitungsgerät nach Anspruch 20, wobei die potentiellen Hilfsverzweigungen, die aus der Ausführung des mindestens einen indirekten Hilfsverzweigungsbefehls resultieren, und die potentiellen Hauptverzweigungen, die aus der Ausführung des mindestens einen indirekten Hauptverzweigungsbefehls resultieren, vorhersagbar sind, wobei die Erzeugungsmittel (MGN) zum Einfügen von Synchronisationsinformationen (@WD_ti) konfiguriert sind, die dazu vorgesehen sind, von der Hilfsverarbeitungseinheit verarbeitet zu werden, und zum Ermöglichen von Synchronisationen zwischen den potentiellen Hilfsverzweigungen, die dazu vorgesehen sind, aus der Ausführung des mindestens einen indirekten Hilfsverzweigungsbefehls hervorzugehen, und den potentiellen Hauptverzweigungen, die dazu vorgesehen sind, aus der Ausführung des mindestens einen indirekten Hauptverzweigungsbefehls hervorzugehen, konfiguriert sind.

22. Datenverarbeitungsgerät nach Anspruch 21, wobei der Hilfsprogrammcode dazu vorgesehen ist, in einem Hilfsspeicher (MX) gespeichert zu werden, der Hauptprogrammcode dazu vorgesehen ist, in einem Hauptspeicher (MP) gespeichert zu werden, wobei die Erzeugungsmittel (MGN) konfiguriert sind zum
- Bewirken, dass die potentiellen Hauptverzweigungen auf mehrere Zielhauptadressen des Hauptspeichers zeigen,
- jeweiligen Assoziieren der Synchronisationsinformationen mit diesen Zielhauptadressen und Bewirken, dass diese jeweils Zielhilfsadressen in dem Hilfsprogrammspeicher bezeichnen,
- Bewirken, dass die potentiellen Hilfsverzweigungen jeweils auf die Zielhilfsadressen zeigen, und
- Konfigurieren des mindestens einen indirekten Hilfsverzweigungsbefehls während seiner Ausführung zum Auswählen der potentiellen Hilfsverzweigung, die mit der Zielhilfsadresse assoziiert ist, die von der Synchronisationsinformation bezeichnet wird, die von dem Hauptspeicher geliefert wird, nach der Lieferung des indirekten Hauptverzweigungsbefehls.

23. Datenverarbeitungsgerät nach Anspruch 22, wobei die Erzeugungsmittel (MGN) konfiguriert sind zum Erzeugen von
- Hauptgrundblöcken von Hauptbefehlen, die mindestens einen ersten Hauptgrundblock, der in dem indirekten Hauptverzweigungsbefehl endet, und mehrere Zielhauptgrundblöcke, die jeweils an den Zielhauptadressen beginnen, umfassen,
- Hilfsgrundblöcken von Hilfsbefehlen, die mit den Hauptgrundblöcken assoziiert sind und mindestens einen ersten Hilfsgrundblock, der mit dem ersten Hauptgrundblock assoziiert ist und in dem indirekten Hilfsverzweigungsbefehl endet, und mehrere Zielhilfsgrundblöcke, die jeweils an den Zielhilfsadressen beginnen, umfassen,
und die Erzeugungsmittel weiterhin dazu fähig sind, für jeden Zielhauptgrundblock mindestens einen komplementären Hauptbefehl, der die Synchronisationsinformation enthält, die die entsprechende Zielhilfsadresse bezeichnet, in den Hauptprogrammcode einzufügen und den indirekten Hilfsverzweigungsbefehl während seiner Ausführung durch die Hilfsverarbeitungseinheit zum Zwingen dieser Hilfsverarbeitungseinheit, auf die Lieferung von einer der Zielhilfsadressen zu warten, zu konfigurieren.

24. Datenverarbeitungsgerät nach Anspruch 23, wobei jeder Speicherplatz des Hauptspeichers eine Speicherkapazität von zwei Befehlswörtern aufweist und die Erzeugungsmittel (MGN) zum Erzeugen des Paars von Befehlen, das sich am Anfang jedes Zielhauptgrundblocks befindet, derart, dass es gegebenenfalls einen Zielhauptbefehl des Hauptprogrammcodes, der für die Hauptverarbeitungseinheit vorgesehen ist, und den komplementären Hauptbefehl, der für die Hilfsverarbeitungseinheit vorgesehen ist und die entsprechende Zielhilfsadresse enthält, umfasst, konfiguriert sind.

25. Datenverarbeitungsgerät nach Anspruch 23, wobei jeder Speicherplatz des Hauptspeichers eine Speicherkapazität von einem Befehlswort aufweist und die Erzeugungsmittel (MGN) zum Bewirken, dass jeder Zielgrundblock mit einem Befehlssatz beginnt, der den mindestens einen komplementären Hauptbefehl enthält und zum Bereitstellen der entsprechenden Zielorthilfsadresse an die Hilfsverarbeitungseinheit konfiguriert ist und zusammen eine Nullsemantik gegenüber der Hauptverarbeitungseinheit aufweist, konfiguriert sind.

26. Datenverarbeitungsgerät nach Anspruch 23, wobei jeder Speicherplatz des Hauptspeichers eine Speicherkapazität von einem Befehlswort aufweist, jeder Hauptbefehl einen Operationscode umfasst und die Erzeugungsmittel (MGN) zum Bewirken, dass jeder Hauptgrundblock mit einem zusätzlichen Befehl beginnt, der den komplementären Hauptbefehl bildet, einen Operationscode enthält, der einer von der Hauptverarbeitungseinheit nicht verwendeten Operation entspricht, für die Hilfsverarbeitungseinheit vorgesehen ist und die Zielhilfsadresse enthält, die der Hilfsverarbeitungseinheit bereitgestellt werden soll, konfiguriert sind.

27. Datenverarbeitungsgerät nach Anspruch 20, wobei der mindestens eine indirekte Hauptverzweigungsbefehl ein indirekter Hauptsprungbefehl ist, der in eine Funktion des Hauptprogrammcodes integriert ist, die einen Hauptrücksprungbefehl umfasst, der mindestens eine indirekte Hilfsverzweigungsbefehl ein indirekter Hilfssprungbefehl ist, der in eine Funktion des Hilfsprogrammcodes integriert ist, die einen Hilfsrücksprungbefehl umfasst, wobei die potentiellen Hilfsverzweigungen, die aus der Ausführung des mindestens einen indirekten Hilfssprungbefehls resultieren, und die potentiellen Hauptverzweigungen, die aus der Ausführung des mindestens einen indirekten Hauptsprungbefehls resultieren, nicht vorhersagbar sind und die Erzeugungsmittel (MGN) zum Einfügen der mindestens einen Synchronisationsinformation, die dazu vorgesehen ist, von der Hilfsverarbeitungseinheit verarbeitet zu werden, zum Ermöglichen von mindestens einer Synchronisation zwischen dem Hauptrücksprungbefehl und dem Hilfsrücksprungbefehl konfiguriert sind.

28. Datenverarbeitungsgerät nach Anspruch 27, wobei die Funktion des Hauptprogrammcodes weiterhin mindestens einen supplementären Hauptverzweigungsbefehl umfasst, die Funktion des Hilfsprogrammcodes weiterhin mindestens einen supplementären Hilfsverzweigungsbefehl umfasst und die Erzeugungsmittel (MGN) zum Einfügen von Synchronisationsinformationen, die dazu vorgesehen sind, von der Hilfsverarbeitungseinheit verarbeitet zu werden, zum Ermöglichen von Synchronisationen zwischen dem Hauptrücksprungbefehl und dem Hilfsrücksprungbefehl, zwischen dem mindestens einen indirekten Hauptsprungbefehl und dem mindestens einen indirekten Hilfssprungbefehl und zwischen jedem supplementären Hauptverzweigungsbefehl und jedem supplementären Hilfsverzweigungsbefehl konfiguriert sind.

29. Datenverarbeitungsgerät nach Anspruch 28, wobei der Hilfsprogrammcode dazu vorgesehen ist, in einem Hilfsspeicher (MX) gespeichert zu werden, der Hauptprogrammcode dazu vorgesehen ist, in einem Hauptspeicher (MP) gespeichert zu werden, wobei die Erzeugungsmittel konfiguriert sind zum
Assoziieren der Synchronisationsinformationen mit dem Hauptrücksprungbefehl, mit dem mindestens einen indirekten Hauptsprungbefehl bzw. mit jedem supplementären Hauptverzweigungsbefehl und Bewirken, dass sie jeweils Zielorthilfsadressen in dem Hilfsprogrammspeicher bezeichnen, an der der Hauptrücksprungbefehl, der mindestens eine indirekte Hauptsprungbefehl bzw. jeder supplementäre Hauptverzweigungsbefehl gespeichert sind, und
Konfigurieren des mindestens einen indirekten Hilfssprungbefehls während seiner Ausführung zum Auswählen der Hilfsverzweigung, die mit der Zielorthilfsadresse assoziiert ist, die von der Synchronisationsinformation bezeichnet wird, die von dem Hauptspeicher geliefert wird, nach der Lieferung des indirekten Hauptsprungbefehls.

30. Datenverarbeitungsgerät nach Anspruch 29, wobei die Erzeugungsmittel (MGN) konfiguriert sind zum
Einfügen des mindestens einen indirekten Hauptsprungbefehls und jedes supplementären Hauptverzweigungsbefehls für jeden Hauptrücksprungbefehl in den Hauptprogrammcode, wobei mindestens ein ergänzender Hauptbefehl die entsprechende Synchronisationsinformation enthält, die die entsprechende Zielorthilfsadresse bezeichnet, und
Konfigurieren des mindestens einen indirekten Hilfssprungbefehls während seiner Ausführung durch die Hilfsverarbeitungseinheit zum Zwingen dieser Hilfsverarbeitungseinheit, auf die Lieferung von einer der Zielorthilfsadressen zu warten (wait for @).

31. Datenverarbeitungsgerät nach Anspruch 30, wobei jeder Speicherplatz des Hauptspeichers eine Speicherkapazität von zwei Befehlswörtern aufweist und die Erzeugungsmittel (MGN) zum Integrieren des entsprechenden ergänzenden Hauptbefehls, der für die Hilfsverarbeitungseinheit vorgesehen ist und die entsprechende Zielorthilfsadresse enthält, in jedes Paar von Befehlen, das entweder den mindestens einen indirekten Hauptsprungbefehl, einen supplementären Hauptverzweigungsbefehl oder einen Hauptrücksprungbefehl umfasst, konfiguriert sind.

32. Datenverarbeitungsgerät nach Anspruch 20, wobei der mindestens eine indirekte Hauptverzweigungsbefehl ein indirekter Hauptaufrufbefehl ist, der in eine Funktion des Hauptprogrammcodes integriert ist, der mindestens eine indirekte Hilfsverzweigungsbefehl ein indirekter Hilfsaufrufbefehl ist, der in eine Funktion des Hilfsprogrammcodes integriert ist, der Hauptprogrammcode mehrere andere Funktionen umfasst und der Hilfsprogrammcode mehrere andere Funktionen umfasst und die Erzeugungsmittel (MGN) zum Einfügen von Synchronisationsinformationen konfiguriert sind, die dazu vorgesehen sind, von der Hilfsverarbeitungseinheit verarbeitet zu werden, und zum Ermöglichen von jeweiligen Synchronisationen zwischen den Eingängen von allen Funktionen des Hauptprogrammodes und den Eingängen von allen Funktionen des Hilfsprogrammcodes konfiguriert sind.

33. Datenverarbeitungsgerät nach Anspruch 32, wobei der Hilfsprogrammcode dazu vorgesehen ist, in einem Hilfsspeicher (MX) gespeichert zu werden, der Hauptprogrammcode dazu vorgesehen ist, in einem Hauptspeicher (MP) gespeichert zu werden, wobei die Erzeugungsmittel konfiguriert sind zum
jeweiligen Assoziieren der Synchronisationsinformationen mit den anfänglichen Hauptbefehlen von allen Funktionen des Hauptprogrammcodes und Bewirken, dass sie jeweils Zielorthilfsadressen in dem Hilfsprogrammspeicher bezeichnen, an denen jeweils die anfänglichen Hilfsbefehle von allen Funktionen des Hilfsprogrammcodes gespeichert sind, und
Konfigurieren des mindestens einen indirekten Hilfsaufrufbefehls während seiner Ausführung zum Auswählen der Hilfsverzweigung, die mit der Zielorthilfsadresse assoziiert ist, die von der Synchronisationsinformation bezeichnet wird, die von dem Hauptspeicher geliefert wird, nach der Lieferung des indirekten Hauptaufrufbefehls.

34. Datenverarbeitungsgerät nach Anspruch 33, wobei die Erzeugungsmittel (MGN) konfiguriert sind zum
für jede Funktion des Hauptprogrammcodes in den Hauptprogrammcode Einfügen des mindestens einen ergänzenden Hauptbefehls, der mit dem anfänglichen Hauptbefehl dieser Funktion assoziiert ist und die entsprechende Synchronisationsinformation enthält, die die entsprechende Zielorthilfsadresse bezeichnet, und
Konfigurieren des mindestens einen indirekten Hilfsaufrufbefehls während seiner Ausführung durch die Hilfsverarbeitungseinheit zum Zwingen dieser Hilfsverarbeitungseinheit, auf die Lieferung von einer der Zielorthilfsadressen zu warten (wait for @).

35. Datenverarbeitungsgerät nach Anspruch 34, wobei jeder Speicherplatz des Hauptspeichers eine Speicherkapazität von zwei Befehlswörtern aufweist und die Erzeugungsmittel (MGN) zum Erzeugen des Paars von Befehlen, das sich am Anfang jeder Funktion des Hauptprogrammcodes befindet, derart, dass es einen Hauptbefehl des Hauptprogrammcodes, der für die Hauptverarbeitungseinheit vorgesehen ist, und den ergänzenden Hauptbefehl, der für die Hilfsverarbeitungseinheit vorgesehen ist und die entsprechende Zielorthilfsadresse enthält, umfasst, konfiguriert sind.

36. Datenverarbeitungsgerät nach Anspruch 34, wobei jeder Speicherplatz des Hauptspeichers eine Speicherkapazität von einem Befehlswort aufweist und die Erzeugungsmittel zum Erzeugen jeder Funktion des Hauptprogrammcodes derart, dass sie mit einem Befehlssatz (INSC1, INSC2) beginnt, der den mindestens einen ergänzenden Hauptbefehl (INSC1) enthält und zum Bereitstellen der entsprechenden Zielorthilfsadresse an die Hilfsverarbeitungseinheit konfiguriert ist und zusammen eine Nullsemantik gegenüber der Hauptverarbeitungseinheit aufweist, konfiguriert sind.

37. Datenverarbeitungsgerät nach Anspruch 34, wobei jeder Speicherplatz des Hauptspeichers eine Speicherkapazität von einem Befehlswort aufweist, jeder Hauptbefehl einen Operationscode umfasst und die Erzeugungsmittel zum Erzeugen jeder Funktion des Hauptprogrammcodes derart, dass sie mit einem zusätzlichen Befehl beginnt, der den ergänzenden Hauptbefehl (INSC1) bildet, einen Operationscode (OPCL) enthält, der einer von der Hauptverarbeitungseinheit nicht verwendeten Operation entspricht, für die Hilfsverarbeitungseinheit vorgesehen ist und die Zielorthilfsadresse enthält, die der Hilfsverarbeitungseinheit bereitgestellt werden soll, konfiguriert sind.

38. Datenverarbeitungsgerät nach einem der Ansprüche 20 bis 37, wobei die Erzeugungsmittel (MGN) zum Erzeugen eines Hilfsprogrammcodes, der zum Bewirken einer Verifizierung des Kontrollflusses des Hauptprogrammcodes eingerichtet ist, konfiguriert sind.

39. Datenverarbeitungssystem, umfassend eine Hauptverarbeitungseinheit (PR), eine Hilfsverarbeitungseinheit (WD), einen Hauptspeicher (MP), der an die Hauptverarbeitungseinheit und an die Hilfsverarbeitungseinheit gekoppelt ist und einen Hauptprogrammcode (CPP) enthält, der durch das Verfahren nach einem der Ansprüche 1 bis 19 oder durch das Datenverarbeitungsgerät nach einem der Ansprüche 20 bis 38 erzeugt wird, und einen Hilfsspeicher (MX), der an die Hilfsverarbeitungseinheit gekoppelt ist und einen Hilfsprogrammcode (CPX) enthält, der durch das Verfahren nach einem der Ansprüche 1 bis 19 oder durch das Datenverarbeitungsgerät nach einem der Ansprüche 20 bis 38 erzeugt wird.

## Claims

1. A method for generating a main program code intended to be executed by a main processing unit and an auxiliary program code intended to be executed by an auxiliary processing unit for checking the control flow of the main program code, **characterised in that** the generation of the main program code (CPP) includes the generation of at least one main indirect branch instruction (INSPF4), the generation of the auxiliary program code (CPX) comprises a generation of at least one auxiliary indirect branch instruction (INSXF4) associated with said at least one main indirect branch instruction, and the generation of the main program code further comprises at least one insertion of at least one synchronisation information (@WD_ti) intended to be processed by the auxiliary processing unit (WD) and configured to allow at least one synchronisation between a portion of auxiliary program code and a portion of main program code resulting respectively from the execution of said at least one auxiliary indirect branch instruction (INSXF4) and the execution of said at least one main indirect branch instruction (INSPF4).

2. The method according to claim 1, wherein the potential auxiliary branches resulting from the execution of said at least one auxiliary indirect branch instruction (INSXF4) and the potential main branches resulting from the execution of said at least one main indirect branch instruction (INSPF4) are predictable, and the generation of the main program code comprises insertions of synchronisation information (@WD_ti) intended for to be processed by the auxiliary processing unit (WD) and configured to allow synchronisations between said potential auxiliary branches resulting from the execution of said at least one auxiliary indirect branch instruction (INSXF4) and said potential main branches resulting from the execution of said at least one main indirect branch instruction (INSPF4).

3. The method according to claim 2, wherein the auxiliary program code is intended to be stored in an auxiliary memory (MX), the main program code is intended to be stored in a main memory (MP), said potential main branches point to several target main addresses (@Case1 - @CaseN) of the main memory, the synchronisation information (@WD_ti) is respectively associated with these target main addresses and designate respectively target auxiliary addresses (@WD_ti) in the auxiliary program memory, and said potential auxiliary branches point respectively to said target auxiliary addresses, and said at least one auxiliary indirect branch instruction (INSXF4) is configured to, during its execution, select the potential auxiliary branch associated with the target auxiliary address designated by the synchronisation information issued by the main memory after the issuance of the main indirect branch instruction (INSPF4).

4. The method according to claim 3, wherein the generation of the main program code comprises a generation of main basic blocks (BBiP) of main instructions including at least one first main basic block (BB4P) ending with said main indirect branch instruction (INSPF4) and several target main basic blocks (BB_ciP) starting respectively at said target main addresses (@Casei),
the generation of the auxiliary program code comprises a generation of auxiliary basic blocks (BBix) of auxiliary instructions associated with said main basic blocks and including at least one first auxiliary basic block (BB4x) associated with the first main basic block and ending with said auxiliary indirect branch instruction (INSXF4) and several target auxiliary basic blocks (BB_ciX) starting respectively at said target auxiliary addresses (@WD_ti), the generation of the main program code further including for each target main basic block (BB_ciP) an insertion in the main program code of at least one complementary main instruction (INSCi) containing said synchronisation information designating said corresponding target auxiliary address, and
said auxiliary indirect branch instruction is configured to, during its execution by the auxiliary processing unit, force this auxiliary processing unit to wait for (wait for @) the issuance of one of said target auxiliary addresses.

5. The method according to claim 4, wherein each memory location of the main memory has a storage capacity of two instruction words, and the pair of instructions located at the start of each target main basic block possibly includes a target main instruction of the main program code intended for the main processing unit and said complementary main instruction (INSCi) intended for the auxiliary processing unit and containing the corresponding target auxiliary address (@WD_ti).

6. The method according to claim 4, wherein each memory location of the main memory has a storage capacity of one instruction word, and each target main block starts with an instruction set (INSC1, INSC2) containing said at least one complementary main instruction (INSC1) and configured to provide the target auxiliary address corresponding to said auxiliary processing unit and together having zero semantics relative to the main processing unit.

7. The method according to claim 4, wherein each memory location of the main memory has a storage capacity of one instruction word, each main instruction includes an operation code, and each target main block starts with an additional instruction, forming said complementary main instruction (INSC1), containing an operation code (OPCL) corresponding to an operation which is not used by the main processing unit, intended for the auxiliary processing unit and containing the target auxiliary address to be provided to said auxiliary processing unit, the operation code (OPCL) of the additional instruction being intended to be replaced by an operation code (OPC1) corresponding to a non-operation (NOP) before issuance to the main processing unit of said additional instruction (INSC2).

8. The method according to claim 1, wherein said at least one main indirect branch instruction is a main indirect jump instruction (INSPF40) incorporated in a function (FCT1) of the main program code including a main return instruction (INSPF80), said at least one auxiliary indirect branch instruction is an auxiliary indirect jump instruction (INSXF40) incorporated in a function (FCTX1) of the auxiliary program code including an auxiliary return instruction (INSXF80), the potential auxiliary branches resulting from the execution of said at least one auxiliary indirect jump instruction (INSXF40) and the potential main branches resulting from the execution of said at least one main indirect jump instruction (INSPF40) are unpredictable, and said at least one synchronisation information (@WD_d5) intended to be processed by the auxiliary processing unit is configured to allow at least one synchronisation between said main return instruction (INSPF80) and said auxiliary return instruction (INSXF80).

9. The method according to claim 8, wherein said function of the main program code further includes at least one supplementary main branch instruction (INSPF10), said function of the auxiliary program code further includes at least one supplementary auxiliary branch instruction (INSXF10), and the generation of the main program code comprises insertions of synchronisation information (@WD_di) intended to be processed by the auxiliary processing unit and configured to allow synchronisations between said main return instruction and said auxiliary return instruction, between said at least one main indirect jump instruction (INSXP40) and said at least one auxiliary indirect jump instruction (INSXF40), and between each supplementary main branch instruction and each supplementary auxiliary branch instruction.

10. The method according to claim 9, wherein the auxiliary program code is intended to be stored in an auxiliary memory (MX), the main program code is intended to be stored in a main memory (MP), the synchronisation information is respectively associated with the main return instruction, with said at least one main indirect jump instruction (INSXP40) and with each supplementary main branch instruction and designate respectively auxiliary destination addresses (@WD_di) in the auxiliary program memory at which the auxiliary return instruction, said at least one auxiliary indirect jump instruction (INSXF40) and each supplementary auxiliary branch instruction are respectively stored, and said at least one auxiliary indirect jump instruction (INSXF40) is configured to, during its execution, select the auxiliary branch associated with the auxiliary destination address designated by the synchronisation information issued by the main memory after the issuance of the main indirect jump instruction (INSPF40).

11. The method according to claim 10, wherein the generation of the main program code comprises for said main return instruction, said at least one main indirect jump instruction (INSXF40) and each supplementary main branch instruction, an insertion in the main program code of at least one suppletive main instruction (INSSPi) containing the corresponding synchronisation information designating the corresponding auxiliary destination address, and said at least one auxiliary indirect jump instruction (INSXF40) is configured to, during its execution by the auxiliary processing unit, force this auxiliary processing unit to wait for (wait for @) the issuance of one of said auxiliary destination addresses.

12. The method according to claim 11, wherein each memory location of the main memory has a storage capacity of two instruction words, and any pair of instructions including either a supplementary main branch instruction or a main return instruction, or a main indirect jump instruction also contains said corresponding suppletive main instruction (INSSPi) intended for the auxiliary processing unit and containing the corresponding auxiliary destination address.

13. The method according to claim 1, wherein said at least one main indirect branch instruction is a main call instruction (INSPF70) incorporated in a function (FCT1) of the main program code, said at least one auxiliary indirect branch instruction is an auxiliary call instruction (INSXF70) incorporated in a function (FCTX1) of the auxiliary program code, the main program code includes several other functions (FCT2-FCTN) and the auxiliary program code includes several other functions (FCTX2-FCTXN), and the generation of the main program code comprises insertions of synchronisation information intended to be processed by the auxiliary processing unit and configured to allow respective synchronisations between the inputs of all functions of the main program code and the inputs of all functions of the auxiliary program code.

14. The method according to claim 13, wherein the auxiliary program code is intended to be stored in an auxiliary memory (MX), the main program code is intended to be stored in a main memory (MP), the synchronisation information is respectively associated with the initial instructions of all functions of the main program code and designates respectively auxiliary destination addresses in the auxiliary program memory at which the initial auxiliary instructions (INSCLX20-INSCLXN) of all functions of the auxiliary program code are respectively stored, and said at least one auxiliary call instruction (INSXF70) is configured to, during its execution, select the auxiliary branch associated with the auxiliary destination address designated by the synchronisation information issued by the main memory after the issuance of the main call instruction (INSPF70).

15. The method according to claim 14, wherein the generation of the main program code comprises, for each function of the main program code, an insertion in the main program code of at least one suppletive main instruction (INSSPi) associated with the initial instruction (INSCLPi) of this function and containing the corresponding synchronisation information designating the corresponding auxiliary destination address, and said at least one auxiliary call instruction is configured to, during its execution by the auxiliary processing unit, force this auxiliary processing unit to wait for (wait for @) the issuance of one of said auxiliary destination addresses.

16. The method according to claim 15, wherein each memory location of the main memory has a storage capacity of two instruction words, and the instruction pair located at the start of each function of the main program code includes a main instruction of the main program code intended for the main processing unit and said suppletive main instruction (INSSPi) intended for the auxiliary processing unit and containing the corresponding auxiliary destination address.

17. The method according to claim 15, wherein each memory location of the main memory has a storage capacity of one instruction word, and each function of the main program code starts with an instruction set (INSC1, INSC2) containing said at least one suppletive main instruction (INSC1) and configured to provide the corresponding auxiliary destination address to said auxiliary processing unit and together having zero semantics relative to the main processing unit.

18. The method according to claim 15, wherein each memory location of the main memory has a storage capacity of one instruction word, each main instruction includes an operation code, and each function of the main program code starts with an additional instruction, forming said suppletive main instruction (INSC1), containing an operation code (OPCL) corresponding to an operation which is not used by the main processing unit, intended for the auxiliary processing unit and containing the auxiliary destination address to be provided to said auxiliary processing unit, the operation code (OPCL) of the additional instruction being intended to be replaced by an operation code (OPC1) corresponding to a non-operation (NOP) before issuance of said additional instruction (INSC2) to the main processing unit.

19. The method according to one of the preceding claims, wherein the auxiliary program code (CPX) is configured to perform a check with disjoint signatures of the control flow of the main program code (CPP).

20. A computer tool, comprising generation means (MGN) configured to generate a main program code (CPP) intended to be executed by a main processing unit (PR) and an auxiliary program code (CPX) intended to be executed by an auxiliary processing unit (WD) for checking the control flow of the main program code, **characterised in that** the generation means (MGN) are configured to generate at least one main indirect branch instruction (INSPF4), at least one auxiliary indirect branch instruction (INSXF4) associated with said at least one main indirect branch instruction and to insert at least one synchronisation information (@WD_ti) intended to be processed by the auxiliary processing unit and configured to allow at least one synchronisation between a portion of auxiliary program code and a portion of main program code resulting respectively from the execution of said at least one auxiliary indirect branch instruction and the execution of said at least one main indirect branch instruction.

21. The computer tool according to claim 20, wherein the potential auxiliary branches resulting from the execution of said at least one auxiliary indirect branch instruction and the potential main branches resulting from the execution of said at least one main indirect branch instruction are predictable, the generation means (MGN) are configured to insert synchronisation information (@WD_ti) intended to be processed by the auxiliary processing unit and configured to allow synchronisations between the potential auxiliary branches intended to be derived from the execution of said at least one auxiliary indirect branch instruction and the potential main branches intended to be derived from the execution of said at least one main indirect branch instruction.

22. The computer tool according to claim 21, wherein the auxiliary program code is intended to be stored in an auxiliary memory (MX), the main program code is intended to be stored in a main memory (MP), the generation means (MGN) are configured to
- make pointing said potential main branches to several target main addresses of the main memory,
- associate the synchronisation information respectively with these target main addresses and designate them respectively target auxiliary addresses in the auxiliary program memory,
- make pointing said potential auxiliary branches respectively to said target auxiliary addresses, and
- configure said at least one auxiliary indirect branch instruction in order to, during its execution, select the potential auxiliary branch associated with the target auxiliary address designated by the synchronisation information issued by the main memory after the issuance of the main indirect branch instruction.

23. The computer tool according to claim 22, wherein the generation means (MGN) are configured to generate
- main basic blocks of main instructions including at least one first main basic block ending with said main indirect branch instruction and several target main basic blocks starting respectively at said target main addresses,
- auxiliary basic blocks of auxiliary instructions associated with said main basic blocks and including at least one first auxiliary basic block associated with the first main basic block and ending with said auxiliary indirect branch instruction and several target auxiliary basic blocks starting respectively at said target auxiliary addresses,
and the generation means are also capable of inserting into the main program code, for each target main basic block, at least one complementary main instruction containing said synchronisation information designating said corresponding target auxiliary address, and of configuring said auxiliary indirect branch instruction in order to, during its execution by the auxiliary processing unit, force this auxiliary processing unit to wait for the issuance of one of said target auxiliary addresses.

24. The computer tool according to claim 23, wherein each memory location of the main memory has a storage capacity of two instruction words, and the generation means (MGN) are configured to generate the pair of instructions located at the start of each target main basic block such that it possibly includes a target main instruction of the main program code intended for the main processing unit and said complementary main instruction intended for the auxiliary processing unit and containing the corresponding target auxiliary address.

25. The computer tool according to claim 23, wherein each memory location of the main memory has a storage capacity of one instruction word, and the generation means (MGN) are configured to start each target main block, by a set of instructions containing said at least one complementary main instruction, and configured to provide the corresponding target auxiliary address to said auxiliary processing unit and together having zero semantics relative to the main processing unit.

26. The computer tool according to claim 23, wherein each memory location of the main memory has a storage capacity of one instruction word, each main instruction includes an operation code and the generation means (MGN) are configured to start each target main block, with an additional instruction, forming said complementary main instruction, containing an operation code corresponding to an operation which is not used by the main processing unit, intended for the auxiliary processing unit and containing the target auxiliary address to be provided to said auxiliary processing unit.

27. The computer tool according to claim 20, wherein said at least one main indirect branch instruction is a main indirect jump instruction incorporated into a function of the main program code including a main return instruction, said at least one auxiliary indirect branch instruction is an auxiliary indirect jump instruction incorporated into a function of the auxiliary program code including an auxiliary return instruction, the potential auxiliary branches resulting from the execution of said at least one auxiliary indirect jump instruction and the potential main branches resulting from the execution of said at least one main indirect jump instruction are unpredictable, and the generation means (MGN) are configured to insert said at least one synchronisation information intended to be processed by the auxiliary processing unit to allow at least one synchronisation between said main return instruction and said auxiliary return instruction.

28. The computer tool according to claim 27, wherein said function of the main program code further includes at least one supplementary main branch instruction, said function of the auxiliary program code further includes at least one supplementary auxiliary branch instruction, and the generation means (MGN) are configured to insert synchronisation information intended to be processed by the auxiliary processing unit to allow synchronisations between said main return instruction and said auxiliary return instruction, between said at least one main indirect jump instruction and said at least one auxiliary indirect jump instruction, and between each supplementary main branch instruction and each supplementary auxiliary branch instruction.

29. The computer tool according to claim 28, wherein the auxiliary program code is intended to be stored in an auxiliary memory (MX), the main program code is intended to be stored in a main memory (MP), the generation means are configured to
associate the synchronisation information respectively with the main return instruction, with said at least one main indirect jump instruction and with each supplementary main branch instruction and designate them respectively auxiliary destination addresses in the auxiliary program memory at which the auxiliary return instruction, said at least one auxiliary indirect jump instruction and each supplementary auxiliary branch instruction are respectively stored, and
configure said at least one auxiliary indirect jump instruction in order to, during its execution, select the auxiliary branch associated with the auxiliary destination address designated by the synchronisation information issued by the main memory after the issuance of the main indirect jump instruction.

30. The computer tool according to claim 29, wherein the generating means (MGN) are configured to
insert in the main program code, for said main return instruction, said at least one main indirect jump instruction and each supplementary main branch instruction, at least one suppletive main instruction containing the corresponding synchronisation information designating the corresponding auxiliary destination address, and
configure said at least one auxiliary indirect jump instruction in order to, during its execution by the auxiliary processing unit, force this auxiliary processing unit to wait for (wait for @) the issuance of one of said auxiliary destination addresses.

31. The computer tool according to claim 30, wherein each memory location of the main memory has a storage capacity of two instruction words, and the generation means (MGN) are configured to incorporate in any pair of instructions including either said at least one main indirect jump instruction, or a supplementary main branch instruction or a main return instruction, said corresponding suppletive main instruction intended for the auxiliary processing unit and containing the corresponding auxiliary destination address.

32. The computer tool according to claim 20, wherein said at least one main indirect branch instruction is a main indirect call instruction incorporated into a function of the main program code, said at least one auxiliary indirect branch instruction is an auxiliary indirect call instruction incorporated into a function of the auxiliary program code, the main program code includes several other functions and the auxiliary program code includes several other functions, and the generation means (MGN) are configured to insert synchronisation information intended to be processed by the auxiliary processing unit and configured to allow respective synchronisations between the inputs of all functions of the main program code and the inputs of all functions of the auxiliary program code.

33. The computer tool according to claim 32, wherein the auxiliary program code is intended to be stored in an auxiliary memory (MX), the main program code is intended to be stored in a main memory (MP), the generation means are configured to
associate the synchronisation information respectively with the initial main instructions of all functions of the main program code and designate them respectively auxiliary destination addresses in the auxiliary program memory at which the initial auxiliary instructions of all functions of the auxiliary program code are respectively stored, and
configure said at least one auxiliary indirect call instruction in order to, during its execution, select the auxiliary branch associated with the auxiliary destination address designated by the synchronisation information issued by the main memory after the issuance of the main indirect call instruction.

34. The computer tool according to claim 33, wherein the generation means (MGN) are configured to
insert in the main program code, for each function of the main program code, at least one suppletive main instruction associated with the initial main instruction of this function and containing the corresponding synchronisation information designating the corresponding auxiliary destination address, and
configure said at least one auxiliary indirect call instruction in order to, during its execution by the auxiliary processing unit, force this auxiliary processing unit to wait for (wait for @) the issuance of one of said auxiliary destination addresses.

35. The computer tool according to claim 34, wherein each memory location of the main memory has a storage capacity of two instruction words, and the generation means (MGN) are configured to generate the pair of instructions located at the start of each function of the main program code such that it includes a main instruction of the main program code intended for the main processing unit and said suppletive main instruction intended for the auxiliary processing unit and containing the corresponding auxiliary destination address.

36. The computer tool according to claim 34, wherein each memory location of the main memory has a storage capacity of one instruction word, and the generation means are configured to generate each function of the main program code such that it starts with a set of instructions (INSC1, INSC2) containing said at least one suppletive main instruction (INSC1) and configured to provide the corresponding auxiliary destination address to said auxiliary processing unit and together having zero semantics relative to the main processing unit.

37. The computer tool according to claim 34, wherein each memory location of the main memory has a storage capacity of one instruction word, each main instruction includes an operation code, and the generation means are configured to generate each function of the main program code such that it starts with an additional instruction, forming said suppletive main instruction (INSC1), containing an operation code (OPCL) corresponding to an operation which is not used by the main processing unit, intended for the auxiliary processing unit and containing the auxiliary destination address to be provided to said auxiliary processing unit.

38. The computer tool according to one of claims 20 to 37, wherein the generation means (MGN) are configured to generate an auxiliary program code adapted to perform a check with disjoint signatures of the control flow of the main program code.

39. A computer system, comprising a main processing unit (PR), an auxiliary processing unit (WD), a main memory (MP) coupled to the main processing unit and to the auxiliary processing unit and containing a main program code (CPP) generated by the method according to one of claims 1 to 19 or by the computer tool according to one of claims 20 to 38, and an auxiliary memory (MX) coupled to the auxiliary processing unit and containing an auxiliary program code (CPX) generated by the method according to one of claims 1 to 19 or by the computer tool according to one of claims 20 to 38.
